# EUROPEAN PATENT APPLICATION

(11) **EP 4 780 117 A1**
(43) Date of publication of application: **22.07.2026**
(21) Application number: 24870281.3
(22) Date of filing: 27.08.2024
(51) Int. Cl.: H04W 72/542

(54) **COMMUNICATION METHOD AND COMMUNICATION APPARATUS**

(30) Priority: 27.09.2023 CN 202311270201
(71) Applicant: HUAWEI TECHNOLOGIES CO., LTD., Shenzhen 518129 (CN)
(72) Inventor: MA, Chuan, Shenzhen, Guangdong 518129 (CN); LIU, Heng, Shenzhen, Guangdong 518129 (CN); CAO, Longyu, Shenzhen, Guangdong 518129 (CN)
(74) Representative: Maiwald GmbH
(86) International application number: PCT/CN2024/114721
(87) International publication number: WO 2025/066735

(57) **Abstract**

This application discloses a communication method and a communication apparatus. The method provided in this application includes: A first network unit receives first resource status information from a second network unit, where the first resource status information includes current resource status information of a network slice of at least one cell. The first network unit sends predicted resource status information to the second network unit, where the predicted resource status information is determined based on the first resource status information and a first model, and the predicted resource status information includes predicted future resource status information of the network slice of the at least one cell. This helps accurately obtain the future resource status information of the network slice of the at least one cell through inference. This helps the second network unit properly allocate a resource to the network slice of the at least one cell based on the predicted resource status information.

## Description

This application claims priority to Chinese Patent Application No. 202311270201.9, filed with the China National Intellectual Property Administration on September 27, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a 5G communication system, service types are classified into three scenarios based on characteristics of network requirements: enhanced mobile broadband (enhanced mobile broadband, eMBB), ultra-reliable low-latency communication (ultra-reliable low-latency communication, URLLC), and massive machine type communication (massive machine type communication, mMTC). For the 5G communication system, to achieve the goal of industry-wide digitalization, services of different industries need to meet a guaranteed service level agreement (service level agreement, SLA), and also meet requirements of independent operation and security isolation. A QoS-based conventional network cannot implement independent operation and security isolation based on different service requirements, and actually cannot provide efficient SLA guarantee for all services. Therefore, a concept of a network slice is proposed. Network slicing enables an operator to build a plurality of end-to-end, virtual, isolated, and on-demand customized dedicated logical networks on a physical network, implementing multi-purpose utilization of the network to meet different requirements of customers in different industries for network capabilities.

Currently, a minimum control granularity of network slice resource management performed by an access network device is a network slice group. One network slice group may include one or more network slices, and one network slice may be configured in only one network slice group. Resource management is classified into three types based on a resource allocation manner: quality of service (quality of service, QoS)-based scheduling, resource block (resource block, RB)-based resource reservation, and carrier-based isolation. A resource allocation granularity in the RB-based resource reservation manner is a network slice group. A resource allocation granularity of both QoS-based scheduling and carrier-based isolation is a single network slice.

However, how an access network device allocates a resource to a network slice to implement proper resource allocation is a problem that needs to be considered.

### SUMMARY

This application provides a communication method and a communication apparatus, so that a first network unit sends predicted resource status information to a second network unit. The predicted resource status information is determined based on first resource status information and a first model. The predicted resource status information includes predicted future resource status information of a network slice of at least one cell. This helps accurately obtain the future resource status information of the network slice of the at least one cell through inference. This helps the second network unit properly allocate a resource to the network slice of the at least one cell based on the predicted resource status information.

A first aspect of this application provides a communication method. The method may be performed by a first network unit. The first network unit may be a network unit in an access network device, a component (for example, a processor, a chip, or a chip system) in the access network device, or a logical module or software that can implement all or some functions of the access network device. The method includes:

The first network unit receives first resource status information from a second network unit, where the first resource status information includes current resource status information of a network slice of at least one cell. The first network unit sends predicted resource status information to the second network unit, where the predicted resource status information is determined based on the first resource status information and a first model, and the predicted resource status information includes predicted future resource status information of the network slice of the at least one cell.

It can be learned that the first network unit sends the predicted resource status information to the second network unit, and the predicted resource status information is determined based on the first resource status information and the first model. In this way, the predicted resource status information is accurately obtained through inference, so that the second network unit obtains the predicted resource status information. This helps the second network unit properly perform resource allocation on the network slice of the at least one cell and radio resource management.

Based on the first aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of radio resource control (radio resource control, RRC) connections of each network slice, a predicted quantity of protocol data unit (protocol data unit, PDU) sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. It can be learned that the predicted resource status information includes slice-level predicted resource status information and session-level predicted resource status information. This helps the second network unit properly allocate resources of the network slice, deploy the network slice to meet an expected requirement, and/or perform radio resource management.

Based on the first aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session. It can be learned that the first resource status information includes slice-level current resource status information and session-level current resource status information. This helps the first network unit to accurately obtain the predicted resource status information based on the first resource status information through inference by using the first model. This helps the second network unit properly allocate resources of the network slice, deploy the network slice to meet an expected requirement, and/or perform radio resource management based on the predicted resource status information.

Based on the first aspect, in a possible implementation, the first resource status information further includes at least one of the following: signal quality of a reference signal transmitted between at least one terminal device in the at least one cell and the second network unit, information about a channel between the at least one terminal device and the second network unit, a quantity of transmit antennas included in the second network unit, a quantity of receive antennas included in the second network unit, or power headroom of the second network unit.

Based on the first aspect, in a possible implementation, after the first network unit sends the predicted resource status information to the second network unit, the method further includes: The first network unit receives updated first resource status information from the second network unit, where the updated first resource status information includes updated current resource status information of the network slice of the at least one cell. In this implementation, the second network unit adjusts resource allocation on the network slice and radio resource management. The first resource status information is also updated, and the second network unit may send the updated first resource status information to the first network unit.

Based on the first aspect, in a possible implementation, before the first network unit receives the first resource status information from the second network unit, the method further includes: The first network unit sends a resource status request to the second network unit, where the resource status request is used to request the first resource status information. That the first network unit receives the first resource status information from the second network unit includes: The first network unit receives a resource status response from the second network unit, where the resource status response includes the first resource status information. In this implementation, the first resource status information may be carried in the resource status response. Therefore, the second network unit provides the first resource status information to the first network unit. There is no need to redefine a new message to carry the first resource status information. Practicability of the solution is improved.

Based on the first aspect, in a possible implementation, that the first network unit receives the first resource status information from the second network unit includes: The first network unit receives a resource status update from the second network unit, where the resource status update includes the first resource status information. In this implementation, the resource status update carries the first resource status information. Therefore, the second network unit provides the first resource status information to the first network unit. There is no need to redefine a new message to carry the first resource status information. Practicability of the solution is improved.

A second aspect of this application provides a communication method. The method may be performed by a second network unit. The second network unit may be a network unit in an access network device, a component (for example, a processor, a chip, or a chip system) in the access network device, or a logical module or software that can implement all or some functions of the access network device. The method includes:

The second network unit sends first resource status information to a first network unit, where the first resource status information includes current resource status information of a network slice of at least one cell. The second network unit receives predicted resource status information from the first network unit, where the predicted resource status information is determined based on the first resource status information and a first model, and the predicted resource status information includes predicted future resource status information of the network slice of the at least one cell.

It can be learned that the second network unit receives the predicted resource status information from the first network unit, where the predicted resource status information is determined based on the first resource status information and the first model, and the predicted resource status information includes the predicted future resource status information of the network slice of the at least one cell. In this way, the predicted resource status information is accurately obtained through inference by using the first model, so that the second network unit obtains the predicted resource status information. This helps the second network unit properly perform resource allocation on the network slice of the at least one cell and radio resource management.

Based on the second aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. It can be learned that the predicted resource status information includes slice-level predicted resource status information and session-level predicted resource status information. This helps the second network unit properly allocate resources of the network slice, deploy the network slice to meet an expected requirement, and/or perform radio resource management.

Based on the second aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session. It can be learned that the first resource status information includes slice-level current resource status information and session-level current resource status information. This helps the first network unit to accurately obtain the predicted resource status information based on the first resource status information through inference by using the first model. This helps the second network unit properly allocate resources of the network slice, deploy the network slice to meet an expected requirement, and/or perform radio resource management based on the predicted resource status information.

Based on the second aspect, in a possible implementation, the first resource status information further includes at least one of the following: signal quality of a reference signal transmitted between at least one terminal device in the at least one cell and the second network unit, information about a channel between the at least one terminal device and the second network unit, a quantity of transmit antennas included in the second network unit, a quantity of receive antennas included in the second network unit, or power headroom of the second network unit.

Based on the second aspect, in a possible implementation, the method further includes: The second network unit determines a resource reservation policy of the network slice of the at least one cell and a radio resource management policy based on the predicted resource status information. The second network unit executes the resource reservation policy and the radio resource management policy. In this way, the second network device properly allocates resources of the network slice and performs radio resource management.

Based on the second aspect, in a possible implementation, after the second network unit executes the resource reservation policy and the radio resource management policy, the method further includes: The second network unit sends updated first resource status information to the first network unit, where the updated first resource status information includes updated current resource status information of the network slice of the at least one cell. In this implementation, the second network unit adjusts resource allocation on the network slice and radio resource management. The first resource status information is also updated, and the second network unit may send the updated first resource status information to the first network unit.

Based on the second aspect, in a possible implementation, the method further includes: The second network unit receives a resource status request from the first network unit, where the resource status request is used to request the first resource status information. That the second network unit sends the first resource status information to the first network unit includes: The second network unit sends a resource status response to the first network unit, where the resource status response includes the first resource status information. In this implementation, the first resource status information may be carried in the resource status response. Therefore, the second network unit provides the first resource status information to the first network unit. There is no need to redefine a new message to carry the first resource status information. Practicability of the solution is improved.

Based on the second aspect, in a possible implementation, that the second network unit sends the first resource status information to the first network unit includes: The second network unit sends a resource status update to the first network unit, where the resource status update includes the first resource status information. Therefore, the second network unit provides the first resource status information to the first network unit. There is no need to redefine a new message to carry the first resource status information. Practicability of the solution is improved.

A third aspect of this application provides a communication method. The method may be performed by a first access network device. The first access network device may be a component (for example, a processor, a chip, or a chip system) in the first access network device, or may be a logical module or software that can implement all or some functions of the first access network device. The method includes:

The first access network device determines first resource status information, where the first resource status information includes resource status information of a network slice of at least one cell, and the at least one cell is a cell covered by the first access network device or a second access network device. The first access network device determines predicted resource status information based on the first resource status information and a first model, where the predicted resource status information includes predicted future resource status information of the network slice of the at least one cell.

In the foregoing technical solution, the first access network device obtains the predicted resource status information through inference based on the first resource status information and the first model. The predicted resource status information includes the predicted future resource status information of the network slice of the at least one cell. In this way, the first access network device accurately obtains the predicted resource status information through inference. Therefore, the first access network device or the second access network device obtains the predicted resource status information, and performs resource reservation on the network slice, radio resource management (for example, mobility management), and the like based on the predicted resource status information.

Based on the third aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. It can be learned that the predicted resource status information includes slice-level predicted resource status information and session-level predicted resource status information. This helps the first access network device or the second access network device properly perform resource reservation and/or mobility management on the network slice. Resources are properly allocated. In this way, an objective such as load balancing is achieved.

Based on the third aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session. It can be learned that the first resource status information includes slice-level current resource status information and session-level current resource status information. This helps the first access network device to accurately obtain the predicted resource status information based on the first resource status information through inference by using the first model. This helps the first access network device or the second access network device properly perform resource reservation and/or mobility management on the network slice. Resources are properly allocated. In this way, an objective such as load balancing is achieved.

Based on the third aspect, in a possible implementation, the first resource status information further includes at least one of the following: signal quality of a reference signal transmitted between at least one terminal device in the at least one cell and the first access network device, information about a channel between the at least one terminal device and the first access network device, a quantity of transmit antennas included in the first access network device, a quantity of receive antennas included in the first access network device, or power headroom of the first access network device.

Based on the third aspect, in a possible implementation, the first resource status information further includes at least one of the following: signal quality of a reference signal transmitted between at least one terminal device in the at least one cell and the second access network device, information about a channel between the at least one terminal device and the second access network device, a quantity of transmit antennas included in the second access network device, a quantity of receive antennas included in the second access network device, or power headroom of the second access network device.

Based on the third aspect, in a possible implementation, the at least one cell is a cell covered by the first access network device, and the method further includes: The first access network device sends the predicted resource status information to the second access network device. It can be learned that the predicted resource status information may be future resource status information of a network slice of at least one cell covered by the first access network device. The first access network device (that is, a current station) obtains the first resource status information of the current station. The first access network device (that is, the current station) sends the predicted resource status information to the second access network device (that is, a neighboring station). Therefore, the second access network device obtains the predicted resource status information of the first access network device. This helps the second access network device properly perform resource reservation and/or mobility management on the network slice based on the predicted resource status information. Resources are properly allocated. In this way, an objective such as load balancing is achieved.

Based on the third aspect, in a possible implementation, before the first access network device sends the predicted resource status information to the second access network device, the method further includes: The first access network device receives a first request from the second access network device, where the first request is used to request the predicted future resource status information of the network slice of the at least one cell. In this implementation, the second access network device may request the predicted resource status information. Therefore, the second access network device obtains the predicted resource status information.

Based on the third aspect, in a possible implementation, the first request further includes a prediction quantity that the second access network device requests to feed back. In this implementation, the first request may further include the requested prediction quantity. Therefore, the first access network device feeds back a corresponding prediction quantity to the second access network device. This helps the second access network device properly perform resource reservation on the network slice and radio resource management.

Based on the third aspect, in a possible implementation, the prediction quantity includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. It can be learned that the prediction quantity includes a slice-level prediction quantity and a session-level prediction quantity. This helps the second access network device properly perform resource reservation and/or mobility management on the network slice. Resources are properly allocated. In this way, an objective such as load balancing is achieved.

Based on the third aspect, in a possible implementation, the method further includes: The first access network device executes a first handover decision and/or a first dual-connectivity decision with the second access network device, where the first handover decision and/or the first dual-connectivity decision are/is determined based on the predicted resource status information, the first handover decision includes that a first terminal device is handed over from the second access network device to the first access network device, the first terminal device is a terminal device served by the second access network device, the first dual-connectivity decision includes that the first access network device serves as a secondary access network device of a second terminal device and establishes a connection to the second terminal device, and the second terminal device is a terminal device served by the second access network device. Therefore, objectives such as mobility management and load balancing of the first access network device and the second access network device are achieved.

Based on the third aspect, in a possible implementation, after the first access network device executes the first handover decision or the first dual-connectivity decision with the second access network device, the method further includes: The first access network device updates the first resource status information, where updated first resource status information includes updated current resource status information of the network slice of the at least one cell. In this implementation, after the first access network device executes the first handover decision or the first dual-connectivity decision with the second access network device, the first resource status information is updated, and the first access network device may determine the updated first resource status information. In this way, network slice resources are properly allocated.

Based on the third aspect, in a possible implementation, the method further includes: The first access network device determines decision assistance information based on the predicted resource status information, where the decision assistance information is used to assist the second access network device in determining a first handover decision and/or a first dual-connectivity decision. The first access network device sends the decision assistance information to the second access network device. In this way, the second access network device obtains the decision assistance information. This helps the second access network device properly perform resource reservation and/or mobility management on the network slice based on the decision assistance information. Resources are properly allocated. In this way, an objective such as load balancing is achieved.

Based on the third aspect, in a possible implementation, the decision assistance information includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold. In this way, the second access network device reschedules the terminal device based on the access probability of each network slice, to implement mobility management.

Based on the third aspect, in a possible implementation, the method further includes: The first access network device executes the first handover decision and/or the first dual-connectivity decision with the second access network device, where the first handover decision or the first dual-connectivity decision is determined by the second access network device based on the decision assistance information, the first handover decision includes that a first terminal device is handed over from the second access network device to the first access network device, the first dual-connectivity decision includes that the first access network device serves as a secondary access network device of a second terminal device and establishes a connection to the second terminal device, and the second terminal device is a terminal device served by the second access network device. Therefore, objectives such as mobility management and load balancing of the first access network device and the second access network device are achieved.

Based on the third aspect, in a possible implementation, after the first access network device executes the first handover decision or the first dual-connectivity decision with the second access network device, the method further includes: The first access network device receives updated first resource status information from the second access network device, where the updated first resource status information includes updated current resource status information of the network slice of the at least one cell. In this implementation, after the first access network device executes the first handover decision or the first dual-connectivity decision with the second access network device, the first resource status information is updated, and the first access network device receives the updated first resource status information from the second access network device. In this way, network slice resources are properly allocated.

Based on the third aspect, in a possible implementation, before the first access network device sends the decision assistance information to the second access network device, the method further includes: The first access network device receives a second request from the second access network device, where the second request is used to request the decision assistance information that is used to assist the second access network device in determining the first handover decision or the first dual-connectivity decision.

Based on the third aspect, in a possible implementation, the second request includes a decision assistance quantity that the second access network device requests to feed back. Therefore, the second access network device properly allocates network slice resources and performs proper mobility management based on the decision assistance information.

Based on the third aspect, in a possible implementation, the decision assistance quantity includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold. In this way, the second access network device reschedules the terminal device based on the access probability of each network slice, to implement mobility management.

Based on the third aspect, in a possible implementation, the at least one cell is a cell covered by the second access network device, and that the first access network device determines the first resource status information includes: The first access network device receives the first resource status information from the second access network device. In this implementation, the first resource status information is current resource status information of a network slice of at least one cell covered by the second access network device. In other words, the first access network device (that is, the current station) obtains the first resource status information of the second access network device (that is, the neighboring station). In this way, the first access network device (that is, the current station) determines the predicted resource status information of the neighboring station based on the first resource status information.

Based on the third aspect, in a possible implementation, the method further includes: The first access network device determines a second handover decision or a second dual-connectivity decision based on the predicted resource status information, where the second handover decision includes that a third terminal device is handed over from the first access network device to the second access network device, the third terminal device is a terminal device served by the first access network device, the second dual-connectivity decision includes that the second access network device serves as a secondary access network device of a fourth terminal device and establishes a connection to the fourth terminal device, and the fourth terminal device is a terminal device served by the first access network device. The first access network device executes the second handover decision or the second dual-connectivity decision with the second access network device. In this way, mobility management is implemented, and network slice resources are properly allocated.

Based on the third aspect, in a possible implementation, the at least one cell is a cell covered by the second access network device, and the method further includes: The first access network device sends the predicted resource status information to the second access network device. In this way, the second access network device (that is, the neighboring station) obtains the predicted resource status information. This helps the second access network device perform resource reservation and/or mobility management on the network slice based on the predicted resource status information. Resources are properly allocated. In this way, an objective such as load balancing is achieved.

Based on the third aspect, in a possible implementation, the method further includes: The first access network device receives updated first resource status information from the second access network device, where the updated first resource status information includes updated current resource status information of the network slice of the at least one cell. In this implementation, the first access network device executes the second handover decision or the second dual-connectivity decision with the second access network device. The first resource status information changes, that is, a resource status of the network slice changes. The second access network device may send the updated first resource status information to the first access network device. In this way, resources are properly allocated.

Based on the third aspect, in a possible implementation, the method further includes: The first access network device receives second resource status information from a core network device, where the second resource status information includes future resource status information that is of the network slice of the at least one cell and that is predicted by the core network device; and that the first access network device determines the predicted resource status information based on the first resource status information, the second resource status information, and the first model includes: The first access network device inputs the first resource status information and the second resource status information into the first model, to obtain the predicted resource status information output by the first model. In this implementation, the first access network device may further determine the predicted resource status information with reference to the second resource status information provided by the core network device. In this way, the first access network device more accurately obtains the predicted resource status information through inference.

A fourth aspect of this application provides a communication method. The method may be performed by a second access network device. The second access network device may be a component (for example, a processor, a chip, or a chip system) in the second access network device, or may be a logical module or software that can implement all or some functions of the second access network device. The method includes:

The second access network device receives predicted resource status information from a first access network device, where the predicted resource status information includes predicted future resource status information of a network slice of at least one cell, the at least one cell is a cell covered by the first access network device or the second access network device, the predicted resource status information is determined based on first resource status information and a first model, and the first resource status information includes resource status information of the network slice of the at least one cell.

It can be learned from the foregoing solution that the second access network device may receive the predicted resource status information. The predicted resource status information includes the predicted future resource status information of the network slice of the at least one cell. The first resource status information includes the resource status information of the network slice of the at least one cell. The predicted resource status information is determined based on the first resource status information and the first model. In this way, the predicted resource status information is accurately obtained through inference, so that the second access network device performs resource reservation on the network slice, radio resource management (for example, mobility management), and the like based on the predicted resource status information.

Based on the fourth aspect, in a possible implementation, before the second access network device receives the predicted resource status information from the first access network device, the method further includes: The second access network device sends a first request to the first access network device, where the first request is used to request the predicted future resource status information of the network slice of the at least one cell. In this way, the second access network device obtains the predicted resource status information. This helps the second access network device perform proper resource allocation and radio resource management.

Based on the fourth aspect, in a possible implementation, the first request further includes a prediction quantity that the second access network device requests to feed back. Therefore, the first access network device feeds back a corresponding prediction quantity to the second access network device. This helps the second access network device properly perform resource reservation on the network slice and radio resource management.

Based on the fourth aspect, in a possible implementation, the prediction quantity includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. It can be learned that the prediction quantity includes a slice-level prediction quantity and a session-level prediction quantity. This helps the second access network device properly perform resource reservation and/or mobility management on the network slice. Resources are properly allocated. In this way, an objective such as load balancing is achieved.

Based on the fourth aspect, in a possible implementation, the method further includes: The second access network device determines a first handover decision or a first dual-connectivity decision based on the predicted resource status information. The second access network device executes the first handover decision or the first dual-connectivity decision with the first access network device. Therefore, objectives such as mobility management and load balancing of the first access network device and the second access network device are achieved.

Based on the fourth aspect, in a possible implementation, the method further includes: After the second access network device executes the first handover decision or the first dual-connectivity decision with the first access network device, the method further includes: The second access network device sends updated first resource status information to the first access network device, where the updated first resource status information includes updated current resource status information of the network slice of the at least one cell. In this implementation, after the first access network device executes the first handover decision or the first dual-connectivity decision with the second access network device, the first resource status information is updated, and the second access network device may send the updated first resource status information to the first access network device. In this way, network slice resources are properly allocated.

Based on the fourth aspect, in a possible implementation, before the second access network device receives the predicted resource status information from the first access network device, the method further includes: The second access network device sends the first resource status information to the first access network device. In this implementation, the second access network device may provide the first resource status information for the first access network device. In this way, the first access network device accurately obtains the predicted resource status information through inference based on the first resource status information.

Based on the fourth aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session. It can be learned that the first resource status information includes slice-level current resource status information and session-level current resource status information. This helps the first access network device to accurately obtain the predicted resource status information based on the first resource status information through inference by using the first model.

Therefore, the second access network device obtains the predicted resource status information, and performs resource reservation on the network slice, radio resource management (for example, mobility management), and the like based on the predicted resource status information.

Based on the fourth aspect, in a possible implementation, the first resource status information further includes at least one of the following: signal quality of a reference signal transmitted between at least one terminal device in the at least one cell and the first access network device, information about a channel between the at least one terminal device and the first access network device, a quantity of transmit antennas included in the first access network device, a quantity of receive antennas included in the first access network device, or power headroom of the first access network device.

Based on the fourth aspect, in a possible implementation, the first resource status information further includes at least one of the following: signal quality of a reference signal transmitted between at least one terminal device in the at least one cell and the second access network device, information about a channel between the at least one terminal device and the second access network device, a quantity of transmit antennas included in the second access network device, a quantity of receive antennas included in the second access network device, or power headroom of the second access network device.

Based on the fourth aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. It can be learned that the predicted resource status information includes slice-level predicted resource status information and session-level predicted resource status information. In this way, the second access network device performs resource reservation on the network slice, radio resource management (for example, mobility management), and the like based on the predicted resource status information.

A fifth aspect of this application provides a communication method. The method may be performed by a second access network device. The second access network device may be a component (for example, a processor, a chip, or a chip system) in the second access network device, or may be a logical module or software that can implement all or some functions of the second access network device. The method includes:

The second access network device receives decision assistance information from a first access network device, where the decision assistance information is determined based on predicted resource status information, the predicted resource status information includes predicted future resource status information of a network slice of at least one cell, the at least one cell is a cell covered by the first access network device or the second access network device, the predicted resource status information is determined based on first resource status information and a first model, and the first resource status information includes current resource status information of the network slice of the at least one cell.

It can be learned from the foregoing technical solution that the second access network device receives the decision assistance information. The decision assistance information is determined based on the predicted resource status information, and the predicted resource status information includes the predicted future resource status information of the network slice of the at least one cell. The predicted resource status information is determined based on the first resource status information and the first model, and the first resource status information includes the current resource status information of the network slice of the at least one cell. In this way, the predicted resource status information is accurately obtained through inference. The decision assistance information is determined based on the predicted resource status information, so that the second access network device performs resource reservation on the network slice, radio resource management (for example, mobility management), and the like based on the decision assistance information.

Based on the fifth aspect, in a possible implementation, the method further includes: The second access network device determines a first handover decision or a first dual-connectivity decision based on the decision assistance information, where the first handover decision includes that a first terminal device is handed over from the second access network device to the first access network device, the first terminal device is a terminal device served by the second access network device, the first dual-connectivity decision includes that the first access network device serves as a secondary access network device of a second terminal device and establishes a connection to the second terminal device, and the second terminal device is a terminal device served by the second access network device.

The second access network device executes the first handover decision or the first dual-connectivity decision with the first access network device. Therefore, objectives such as mobility management and load balancing of the first access network device and the second access network device are achieved.

Based on the fifth aspect, in a possible implementation, after the second access network device executes the first handover decision or the first dual-connectivity decision with the first access network device, the method further includes: The second access network device sends updated first resource status information to the first access network device, where the updated first resource status information includes updated current resource status information of the network slice of the at least one cell. In this implementation, the second access network device executes the first handover decision or the first dual-connectivity decision with the first access network device. The first resource status information changes, that is, a resource status of the network slice changes. The second access network device may send the updated first resource status information to the first access network device. In this way, resources are properly allocated.

Based on the fifth aspect, in a possible implementation, before the second access network device receives the decision assistance information from the first access network device, the method further includes: The second access network device sends a second request to the first access network device, where the second request is used to request the decision assistance information that is used to assist the second access network device in determining the first handover decision or the first dual-connectivity decision. Therefore, the second access network device properly allocates network slice resources and performs proper mobility management based on the decision assistance information.

Based on the fifth aspect, in a possible implementation, the second request further includes a decision assistance quantity that the second access network device requests to feed back.

Based on the fifth aspect, in a possible implementation, the decision assistance quantity includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold. In this way, the second access network device reschedules the terminal device based on the access probability of each network slice, to implement mobility management.

Based on the fifth aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session. It can be learned that the predicted resource status information includes slice-level predicted resource status information and session-level predicted resource status information. In this way, the second access network device performs resource reservation on the network slice, radio resource management (for example, mobility management), and the like.

Based on the fifth aspect, in a possible implementation, the first resource status information further includes at least one of the following: signal quality of a reference signal transmitted between at least one terminal device in the at least one cell and the first access network device, information about a channel between the at least one terminal device and the first access network device, a quantity of transmit antennas included in the first access network device, a quantity of receive antennas included in the first access network device, or power headroom of the first access network device.

Based on the fifth aspect, in a possible implementation, the first resource status information further includes at least one of the following: signal quality of a reference signal transmitted between at least one terminal device in the at least one cell and the second access network device, information about a channel between the at least one terminal device and the second access network device, a quantity of transmit antennas included in the second access network device, a quantity of receive antennas included in the second access network device, or power headroom of the second access network device.

Based on the fifth aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of radio resource control RRC connections of each network slice, a predicted quantity of protocol data unit PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. It can be learned that the first resource status information includes slice-level current resource status information and session-level current resource status information. This helps the first access network device to accurately obtain the predicted resource status information based on the first resource status information through inference by using the first model.

A sixth aspect of this application provides a communication apparatus, including:
a transceiver module, configured to receive first resource status information from a second network unit, where the first resource status information includes current resource status information of a network slice of at least one cell; and send predicted resource status information to the second network unit, where the predicted resource status information is determined based on the first resource status information and a first model, and the predicted resource status information includes predicted future resource status information of the network slice of the at least one cell.

Based on the sixth aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

Based on the sixth aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

Based on the sixth aspect, in a possible implementation, the first resource status information further includes at least one of the following: signal quality of a reference signal transmitted between at least one terminal device in the at least one cell and the second network unit, information about a channel between the at least one terminal device and the second network unit, a quantity of transmit antennas included in the second network unit, a quantity of receive antennas included in the second network unit, or power headroom of the second network unit.

Based on the sixth aspect, in a possible implementation, the transceiver module is further configured to receive updated first resource status information from the second network unit, where the updated first resource status information includes updated current resource status information of the network slice of the at least one cell.

Based on the sixth aspect, in a possible implementation, the transceiver module is further configured to send a resource status request to the second network unit, where the resource status request is used to request the first resource status information; and the transceiver module is specifically configured to receive a resource status response from the second network unit, where the resource status response includes the first resource status information.

Based on the sixth aspect, in a possible implementation, the transceiver module is specifically configured to receive a resource status update from the second network unit, where the resource status update includes the first resource status information.

A seventh aspect of this application provides a communication apparatus, including:
a transceiver module, configured to send first resource status information to a first network unit, where the first resource status information includes current resource status information of a network slice of at least one cell; and receive predicted resource status information from the first network unit, where the predicted resource status information is determined based on the first resource status information and a first model, and the predicted resource status information includes predicted future resource status information of the network slice of the at least one cell.

Based on the seventh aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

Based on the seventh aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

Based on the seventh aspect, in a possible implementation, the first resource status information includes at least one of the following: signal quality of a reference signal transmitted between at least one terminal device in the at least one cell and a communication apparatus, information about a channel between the at least one terminal device and the communication apparatus, a quantity of transmit antennas included in the communication apparatus, a quantity of receive antennas included in the communication apparatus, or power headroom of the communication apparatus.

Based on the seventh aspect, in a possible implementation, the communication apparatus further includes a processing module, where the processing module is configured to determine a resource reservation policy of the network slice of the at least one cell and a radio resource management policy based on the predicted resource status information; and execute the resource reservation policy and the radio resource management policy.

Based on the seventh aspect, in a possible implementation, the transceiver module is further configured to send updated first resource status information to the first network unit, where the updated first resource status information includes updated current resource status information of the network slice of the at least one cell.

Based on the seventh aspect, in a possible implementation, the transceiver module is further configured to receive a resource status request from the first network unit, where the resource status request is used to request the first resource status information; and the transceiver module is specifically configured to send a resource status response to the first network unit, where the resource status response includes the first resource status information.

Based on the seventh aspect, in a possible implementation, the transceiver module is specifically configured to send a resource status update to the first network unit, where the resource status update includes the first resource status information.

An eighth aspect of this application provides a communication apparatus, including:
a processing module, configured to determine first resource status information, where the first resource status information includes resource status information of a network slice of at least one cell, and the at least one cell is a cell covered by the communication apparatus or a second access network device; and determine predicted resource status information based on the first resource status information and a first model, where the predicted resource status information includes predicted future resource status information of the network slice of the at least one cell.

Based on the eighth aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

Based on the eighth aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

Based on the eighth aspect, in a possible implementation, the first resource status information further includes at least one of the following: signal quality of a reference signal transmitted between at least one terminal device in the at least one cell and a communication apparatus, information about a channel between the at least one terminal device and the communication apparatus, a quantity of transmit antennas included in the communication apparatus, a quantity of receive antennas included in the communication apparatus, or power headroom of the communication apparatus.

Based on the eighth aspect, in a possible implementation, the first resource status information further includes at least one of the following: signal quality of a reference signal transmitted between at least one terminal device in the at least one cell and the second access network device, information about a channel between the at least one terminal device and the second access network device, a quantity of transmit antennas included in the second access network device, a quantity of receive antennas included in the second access network device, or power headroom of the second access network device.

Based on the eighth aspect, in a possible implementation, the at least one cell is a cell covered by the communication apparatus; the communication apparatus further includes a transceiver module; and the transceiver module is configured to send the predicted resource status information to the second access network device.

Based on the eighth aspect, in a possible implementation, the communication apparatus further includes a transceiver module; and the transceiver module is configured to receive a first request from the second access network device, where the first request is used to request the predicted future resource status information of the network slice of the at least one cell.

Based on the eighth aspect, in a possible implementation, the first request further includes a prediction quantity that the second access network device requests to feed back. In this implementation, the first request may further include the requested prediction quantity.

Based on the eighth aspect, in a possible implementation, the prediction quantity includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

Based on the eighth aspect, in a possible implementation, the processing module is further configured to execute a first handover decision and/or a first dual-connectivity decision with the second access network device, where the first handover decision and/or the first dual-connectivity decision are/is determined based on the predicted resource status information, the first handover decision includes that a first terminal device is handed over from the second access network device to the communication apparatus, the first terminal device is a terminal device served by the second access network device, the first dual-connectivity decision includes that the communication apparatus serves as a secondary access network device of a second terminal device and establishes a connection to the second terminal device, and the second terminal device is a terminal device served by the second access network device.

Based on the eighth aspect, in a possible implementation, the processing module is further configured to update the first resource status information, where updated first resource status information includes updated current resource status information of the network slice of the at least one cell.

Based on the eighth aspect, in a possible implementation, the processing module is further configured to determine decision assistance information based on the predicted resource status information, where the decision assistance information is used to assist the second access network device in determining a first handover decision and/or a first dual-connectivity decision; and the transceiver module is further configured to send the decision assistance information to the second access network device.

Based on the eighth aspect, in a possible implementation, the decision assistance information includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold.

Based on the eighth aspect, in a possible implementation, the processing module is further configured to execute the first handover decision and/or the first dual-connectivity decision with the second access network device, where the first handover decision or the first dual-connectivity decision is determined by the second access network device based on the decision assistance information, the first handover decision includes that a first terminal device is handed over from the second access network device to the communication apparatus, the first dual-connectivity decision includes that the communication apparatus serves as a secondary access network device of a second terminal device and establishes a connection to the second terminal device, and the second terminal device is a terminal device served by the second access network device.

Based on the eighth aspect, in a possible implementation, the communication apparatus further includes a transceiver module; and the transceiver module is configured to receive updated first resource status information from the second access network device, where the updated first resource status information includes updated current resource status information of the network slice of the at least one cell.

Based on the eighth aspect, in a possible implementation, the transceiver module is further configured to receive a second request from the second access network device, where the second request is used to request the decision assistance information that is used to assist the second access network device in determining the first handover decision or the first dual-connectivity decision.

Based on the eighth aspect, in a possible implementation, the second request includes a decision assistance quantity that the second access network device requests to feed back.

Based on the eighth aspect, in a possible implementation, the decision assistance quantity includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold.

Based on the eighth aspect, in a possible implementation, the at least one cell is a cell covered by the second access network device, and the processing module is specifically configured to receive the first resource status information from the second access network device.

Based on the eighth aspect, in a possible implementation, the processing module is further configured to determine a second handover decision or a second dual-connectivity decision based on the predicted resource status information, where the second handover decision includes that a third terminal device is handed over from the communication apparatus to the second access network device, the third terminal device is a terminal device served by the communication apparatus, the second dual-connectivity decision includes that the second access network device serves as a secondary access network device of a fourth terminal device and establishes a connection to the fourth terminal device, and the fourth terminal device is a terminal device served by the communication apparatus; and execute the second handover decision or the second dual-connectivity decision with the second access network device.

Based on the eighth aspect, in a possible implementation, the at least one cell is a cell covered by the second access network device; the communication apparatus further includes a transceiver module; and the transceiver module is configured to send the predicted resource status information to the second access network device.

Based on the eighth aspect, in a possible implementation, the communication apparatus further includes a transceiver module; and the transceiver module is configured to receive updated first resource status information from the second access network device, where the updated first resource status information includes updated current resource status information of the network slice of the at least one cell.

Based on the eighth aspect, in a possible implementation, the communication apparatus further includes a transceiver module; the transceiver module is configured to receive second resource status information from a core network device, where the second resource status information includes future resource status information that is of the network slice of the at least one cell and that is predicted by the core network device; and the processing module is specifically configured to input the first resource status information and the second resource status information into the first model, to obtain the predicted resource status information output by the first model.

A ninth aspect of this application provides a communication apparatus, including:
a transceiver module, configured to receive predicted resource status information from a first access network device, where the predicted resource status information includes predicted future resource status information of a network slice of at least one cell, the at least one cell is a cell covered by the first access network device or the communication apparatus, the predicted resource status information is determined based on first resource status information and a first model, and the first resource status information includes resource status information of the network slice of the at least one cell.

Based on the ninth aspect, in a possible implementation, the transceiver module is further configured to send a first request to the first access network device, where the first request is used to request the predicted future resource status information of the network slice of the at least one cell.

Based on the ninth aspect, in a possible implementation, the first request further includes a prediction quantity that the communication apparatus requests to feed back.

Based on the ninth aspect, in a possible implementation, the prediction quantity includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

Based on the ninth aspect, in a possible implementation, the communication apparatus further includes a processing module; and the processing module is configured to determine a first handover decision or a first dual-connectivity decision based on the predicted resource status information; and execute the first handover decision or the first dual-connectivity decision with the first access network device.

Based on the ninth aspect, in a possible implementation, the transceiver module is further configured to send updated first resource status information to the first access network device, where the updated first resource status information includes updated current resource status information of the network slice of the at least one cell.

Based on the ninth aspect, in a possible implementation, the transceiver module is further configured to send the first resource status information to the first access network device.

Based on the ninth aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

Based on the ninth aspect, in a possible implementation, the first resource status information further includes at least one of the following: signal quality of a reference signal transmitted between at least one terminal device in the at least one cell and the first access network device, information about a channel between the at least one terminal device and the first access network device, a quantity of transmit antennas included in the first access network device, a quantity of receive antennas included in the first access network device, or power headroom of the first access network device.

Based on the ninth aspect, in a possible implementation, the first resource status information further includes at least one of the following: signal quality of a reference signal transmitted between at least one terminal device in the at least one cell and the communication apparatus, information about a channel between the at least one terminal device and the communication apparatus, a quantity of transmit antennas included in the communication apparatus, a quantity of receive antennas included in the communication apparatus, or power headroom of the communication apparatus.

Based on the ninth aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

A tenth aspect of this application provides a communication apparatus, including:
a transceiver module, configured to receive decision assistance information from a first access network device, where the decision assistance information is determined based on predicted resource status information, the predicted resource status information includes predicted future resource status information of a network slice of at least one cell, the at least one cell is a cell covered by the first access network device or the communication apparatus, the predicted resource status information is determined based on first resource status information and a first model, and the first resource status information includes current resource status information of the network slice of the at least one cell.

Based on the tenth aspect, in a possible implementation, the communication apparatus further includes a processing module; and the processing module is configured to determine a first handover decision or a first dual-connectivity decision based on the decision assistance information, where the first handover decision includes that a first terminal device is handed over from the communication apparatus to the first access network device, the first terminal device is a terminal device served by the communication apparatus, the first dual-connectivity decision includes that the first access network device serves as a secondary access network device of a second terminal device and establishes a connection to the second terminal device, and the second terminal device is a terminal device served by the communication apparatus; and execute the first handover decision or the first dual-connectivity decision with the first access network device. Therefore, objectives such as mobility management and load balancing of the first access network device and the communication apparatus are achieved.

Based on the tenth aspect, in a possible implementation, the transceiver module is further configured to send updated first resource status information to the first access network device, where the updated first resource status information includes updated current resource status information of the network slice of the at least one cell.

Based on the tenth aspect, in a possible implementation, the transceiver module is further configured to send a second request to the first access network device, where the second request is used to request the decision assistance information that is used to assist the communication apparatus in determining the first handover decision or the first dual-connectivity decision.

Based on the tenth aspect, in a possible implementation, the second request further includes a decision assistance quantity that the communication apparatus requests to feed back.

Based on the tenth aspect, in a possible implementation, the decision assistance quantity includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold.

Based on the tenth aspect, in a possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

Based on the tenth aspect, in a possible implementation, the first resource status information further includes at least one of the following: signal quality of a reference signal transmitted between at least one terminal device in the at least one cell and the first access network device, information about a channel between the at least one terminal device and the first access network device, a quantity of transmit antennas included in the first access network device, a quantity of receive antennas included in the first access network device, or power headroom of the first access network device.

Based on the tenth aspect, in a possible implementation, the first resource status information further includes at least one of the following: signal quality of a reference signal transmitted between at least one terminal device in the at least one cell and the communication apparatus, information about a channel between the at least one terminal device and the communication apparatus, a quantity of transmit antennas included in the communication apparatus, a quantity of receive antennas included in the communication apparatus, or power headroom of the communication apparatus.

Based on the tenth aspect, in a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

An eleventh aspect of this application provides a communication apparatus. The communication apparatus includes a processor and a memory. The memory stores a computer program or computer instructions, and the processor is configured to invoke and run the computer program or the computer instructions stored in the memory, so that the processor implements any one of the implementations of any one of the first aspect to the fifth aspect.

Optionally, the communication apparatus further includes a transceiver, and the processor is configured to control the transceiver to receive and send a signal.

A twelfth aspect of this application provides a communication apparatus, including a processor and an interface circuit. The processor is configured to communicate with another apparatus through the interface circuit, and perform the method according to any one of the first aspect to the fifth aspect. There are one or more processors.

A thirteenth aspect of this application provides a communication apparatus, including a processor, configured to be connected to a memory, and configured to invoke a program stored in the memory, to perform the method according to any one of the first aspect to the fifth aspect. The memory may be located inside or outside the communication apparatus. In addition, there are one or more processors.

In an implementation, the communication apparatus according to any one of the sixth aspect to the tenth aspect may be a chip or a chip system.

A fourteenth aspect of this application provides a computer program product including computer instructions. When the computer program product runs on a computer, the computer is enabled to perform any one of the implementations of any one of the first aspect to the fifth aspect.

A fifteenth aspect of this application provides a computer-readable storage medium, including computer instructions. When the instructions are run on a computer, the computer is enabled to perform any one of the implementations of any one of the first aspect to the fifth aspect.

A sixteenth aspect of this application provides a chip apparatus, including a processor, configured to invoke a computer program or computer instructions in a memory, to enable the processor to perform any one of the implementations of any one of the first aspect to the fifth aspect.

Optionally, the processor is coupled to the memory through an interface.

A seventeenth aspect of this application provides a communication system. The communication system includes a first network unit and a second network unit, the first network unit is configured to perform the method shown in the first aspect, and the second network unit is configured to perform the method shown in the second aspect; or
the communication system includes a first access network device and a second access network device, the first access network device is configured to perform the method shown in the third aspect, and the second access network device is configured to perform the method shown in the fourth aspect or the fifth aspect.

It can be learned from the foregoing technical solutions that the first network unit receives the first resource status information from the second network unit. The first resource status information includes the current resource status information of the network slice of the at least one cell. Then, the first network unit sends the predicted resource status information to the second network unit. The predicted resource status information is determined based on the first resource status information and the first model. The predicted resource status information includes the predicted future resource status information of the network slice of the at least one cell. This helps accurately obtain the future resource status information of the network slice of the at least one cell through inference, so that the second network unit obtains the predicted resource status information. This helps the second network unit properly allocate a resource to the network slice of the at least one cell.

### BRIEF DESCRIPTION OF DRAWINGS

FIG. 1 is a diagram of a communication system according to an embodiment of this application;
FIG. 2 is a diagram of a structure of an access network device according to an embodiment of this application;
FIG. 3A is a diagram of an embodiment of a communication method according to an embodiment of this application;
FIG. 3B is a diagram of another embodiment of a communication method according to an embodiment of this application;
FIG. 4 is a diagram of still another embodiment of a communication method according to an embodiment of this application;
FIG. 5 is a diagram of still another embodiment of a communication method according to an embodiment of this application;
FIG. 6 is a diagram of still another embodiment of a communication method according to an embodiment of this application;
FIG. 7 is a diagram of still another embodiment of a communication method according to an embodiment of this application;
FIG. 8 is a diagram of a structure of a communication apparatus according to an embodiment of this application;
FIG. 9 is another diagram of a structure of a communication apparatus according to an embodiment of this application;
FIG. 10 is still another diagram of a structure of a communication apparatus according to an embodiment of this application;
FIG. 11 is still another diagram of a structure of a communication apparatus according to an embodiment of this application; and
FIG. 12 is a diagram of a structure of a base station according to an embodiment of this application.

### DESCRIPTION OF EMBODIMENTS

Embodiments of this application provide a communication method and a communication apparatus, so that a first network unit sends predicted resource status information to a second network unit. The predicted resource status information is determined based on first resource status information and a first model. The predicted resource status information includes predicted future resource status information of a network slice of at least one cell. This helps accurately obtain the future resource status information of the network slice of the at least one cell through inference. This helps the second network unit properly allocate a resource to the network slice of the at least one cell based on the predicted resource status information.

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

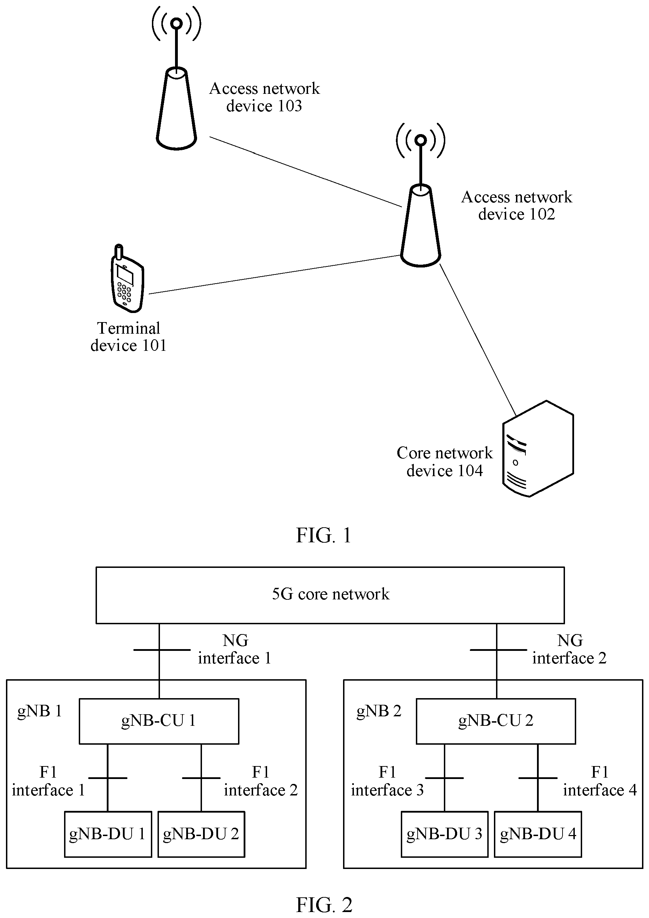

FIG. 1 is a diagram of a communication system according to an embodiment of this application. As shown in FIG. 1, the communication system includes a terminal device 101, an access network device 102, an access network device 103, and a core network device 104.

The access network device 102 may support access and communication of the terminal device 101.

Optionally, the core network device 104 is configured to perform access control, registration management, service management, mobility management, and the like for the terminal device 101 to access a network. For example, the core network device is an access and mobility management function (access and mobility management function, AMF). Alternatively, the core network device may be a management data analytics function (management data analytics function, MDAF) in network management (operations, administration and maintenance, OAM), another data analytics module in network servitization, or a network data analytics function (network data analytics function, NWDAF).

FIG. 1 shows only an example of the communication system. In actual application, the communication system includes at least one access network device. Optionally, the communication system further includes at least one terminal device and at least one core network device.

The technical solutions of this application may be applied to a cellular communication system related to the 3rd generation partnership project (3rd generation partnership project, 3GPP), for example, a 4th generation (4th generation, 4G) communication system, a 5th generation (5th generation, 5G) communication system, or a communication system after the 5th generation communication system, for example, a 6th generation communication system. For example, the 4th generation communication system may include a long term evolution (long term evolution, LTE) communication system. The 5th generation communication system may include a new radio (new radio, NR) communication system. The technical solutions of this application may also be applied to a wireless fidelity (wireless fidelity, Wi-Fi) system, a communication system that supports convergence of a plurality of wireless technologies, a device-to-device (device-to-device, D2D) system, a vehicle to everything (vehicle to everything, V2X) communication system, a satellite communication system, and the like. The wireless communication system in this application further includes but is not limited to a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, or a time division-synchronization code division multiple access (time division-synchronization code division multiple access, TD-SCDMA) system.

The following describes a terminal device and an access network device in this application.

The terminal device is also referred to as a user equipment (user equipment, UE), a mobile station (mobile station, MS), a mobile terminal (mobile terminal, MT), customer premise equipment (customer premise equipment, CPE), or the like. The terminal device is a device that includes a wireless communication function (providing a user with voice/data connectivity), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self driving may be an uncrewed aerial vehicle, a helicopter, or an airplane. For example, the wireless terminal in the internet of vehicles may be a vehicle-mounted device, a vehicle equipment, a vehicle-mounted module, a vehicle, or a ship; the wireless terminal in industrial control may be a camera, a robot, or a robot arm; and the wireless terminal in the smart home may be a television, an air conditioner, a sweeper, a speaker, or a set-top box.

It should be noted that the terminal device may be a device or an apparatus with a chip, a device or an apparatus integrated with a circuit, or a chip, a module, or a control unit in the device or the apparatus shown above. This is not specifically limited in this application.

The access network device is a device that is deployed in a radio access network and that provides a wireless communication function for the terminal device. The access network device may also be referred to as an access network (radio access network, RAN) entity, an access node, a network node, a communication apparatus, or the like.

Specifically, the access network device may be an access network device of a cellular system related to the 3rd generation partnership project (3rd generation partnership project, 3GPP), for example, a 4th generation (4th generation, 4G) mobile communication system or a 5G mobile communication system. Alternatively, the access network device may be an access network device in an open radio access network (open RAN, O-RAN, or ORAN) or a cloud radio access network (cloud radio access network, CRAN). Alternatively, the access network device may be an access network device in a communication system obtained by integrating the foregoing two or more communication systems.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), or a transmission reception point (transmission reception point, TRP). Alternatively, the access network device may be an access network device in the 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the access network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the access network device may be a server, a wearable device, a vehicle, a vehicle-mounted device, or the like. For example, the network device may be a road side unit (road side unit, RSU) in a V2X technology.

It should be noted that in different systems, the CU (or the CU-CP and the CU-UP), the DU, or the RU may have different names, but a person skilled in the art may understand meanings of the names. For example, in an open access network (open radio access network, ORAN) system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented by a software module, a hardware module, or a combination of the software module and the hardware module.

Optionally, for network elements in the ORAN system, each network element may implement a protocol layer function shown in Table 1.

**Table 1**

| ORAN network element | Protocol layer function |
|---|---|
| O-CU-CP | RRC and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (medium access control, MAC), and physical-high (physical-high, PHY-high) |
| O-RU | Physical-low (PHY-low) |

It should be noted that the access network device may be one or more network elements shown in Table 1. This is not specifically limited in this application.

It should be noted that Table 1 is merely an example. During actual application, a protocol layer function supported by each network element is not limited. For example, each network element may support more protocol layer functions, or the protocol layer function supported by each network element is specifically configured based on an actual situation. This is not specifically limited in this application.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a PDCP layer and a protocol layer above the PDCP layer (for example, an RRC layer and/or an SDAP layer). The DU is configured to implement functions of a protocol layer below the PDCP layer (for example, an RLC layer, a MAC layer, and/or a PHY layer). For another example, the CU is configured to implement functions of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may perform interaction with a network element configured to implement a control plane function in the core network. A network element configured to implement a control plane function in the core network may be an access and mobility function network element, for example, an AMF in the 5G mobile communication system. The AMF is responsible for mobility management in a mobile network, for example, location update of a terminal device, network registration of the terminal device, and handover of the terminal device. The CU-UP may perform interaction with a network element configured to implement a user plane function in the core network. The network element configured to implement the user plane function in the core network, for example, a user function (user plane function, UPF) in the 5G mobile communication system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be obtained through division based on a service type or another system requirement. For example, division is performed based on a latency, a function whose processing time needs to satisfy a small-latency requirement is set on the DU, and a function whose processing time does not need to satisfy the latency requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include the other part of functions of the physical layer, and the other part of functions are closer to an intermediate radio frequency side.

It should be noted that the access network device may be the device or apparatus shown above, or may be a component (for example, a chip), a module, or a unit in the device or apparatus shown above. This is not specifically limited in this application.

The following describes a diagram of a structure of an access network device including a CU and a DU. FIG. 2 is a diagram of a structure of an access network device according to an embodiment of this application. For example, the access network device is a gNB. Refer to FIG. 2. In a 5G communication system, gNBs are connected through an Xn interface, and the gNB is connected to a 5th generation mobile communication technology core (the 5th generation mobile communication technology core, 5GC) network through an NG interface. As shown in FIG. 2, a gNB 1 and a gNB 2 are connected through the Xn interface. The gNB 1 is connected to the 5GC through an NG interface 1, and the gNB 2 is connected to the 5GC through an NG interface 2.

The gNB may include a CU and a DU. To be specific, functions of a base station are split, a part of the functions of the base station is deployed on a gNB-CU, and a remaining function is deployed on a gNB-DU. A plurality of gNB-DUs share one gNB-CU. This can reduce costs and facilitate network expansion. For example, as shown in FIG. 2, the gNB 1 includes a gNB-CU 1, a gNB-DU 1, and a gNB-DU 2. The gNB-CU 1 is connected to the gNB-DU 1 through an F1 interface 1, and is connected to the gNB-DU 2 through an F1 interface 2. A structure of the gNB 2 is similar to a structure of the gNB 1. Details are not described one by one herein again.

FIG. 2 is merely an example. One gNB-CU may be connected to one or more gNB-DUs. This is not specifically limited in this application.

The gNB-CU and the gNB-DU may be split based on a protocol stack. For example, RRC, SDAP, and PDCP layer protocol stacks are deployed on the gNB-CU. Radio link control (radio link control, RLC) layer, MAC layer, and PHY layer protocol stacks are deployed on the gNB-DU. The gNB-CU and the gNB-DU are connected through an F1 interface. The foregoing examples are merely intended to describe the gNB-CU and the gNB-DU. Protocol stacks deployed on the gNB-CU and the gNB-DU are not limited in this application.

In this application, in the following solution in which the access network device uses a structure of the CU and the DU, the gNB-CU is referred to as the CU for short, and the gNB-DU is referred to as the DU for short.

It should be noted that the CU and the DU are an implementation of dividing the access network device into network units. Functions included in the CU and the DU respectively may be divided as evolution or a requirement occurs. The functions included in the CU and the DU respectively are not limited in this application. Names corresponding to the CU and the DU respectively are not limited in this application.

In this application, the access network device may be divided into a first network unit and a second network unit. The first network unit and the second network unit may be classified into the CU and the DU in the foregoing division manner. The functions included in the CU and the DU respectively are not limited in this application. The functions may be specifically divided based on an actual function requirement. Names corresponding to the CU and the DU respectively are not limited. In other words, the first network unit and the second network unit may have other names. This is not specifically limited in this application. In a possible implementation, the first network unit may be the CU shown above, and the second network unit may be the DU shown above. In another possible implementation, the first network unit may be the DU shown above, and the second network unit may be the CU shown above. The following mainly describes the technical solutions of this application by using an example in which the first network unit may be the CU shown above, and the second network unit may be the DU shown above.

Currently, a minimum control granularity of network slice resource management performed by the access network device is a network slice group. One network slice group may include one or more network slices, and one network slice may be configured in only one network slice group. Resource management is classified into three types based on a resource allocation manner: QoS-based scheduling, RB-based resource reservation, and carrier-based isolation. A resource allocation granularity in the RB-based resource reservation manner is a network slice group. A resource allocation granularity of both QoS-based scheduling and carrier-based isolation is a single network slice. However, how an access network device allocates a resource to a network slice to implement proper resource allocation is a problem that needs to be considered. This application provides corresponding technical solutions. For details, refer to related descriptions in the following embodiments.

The following describes the technical solutions of this application with reference to specific embodiments.

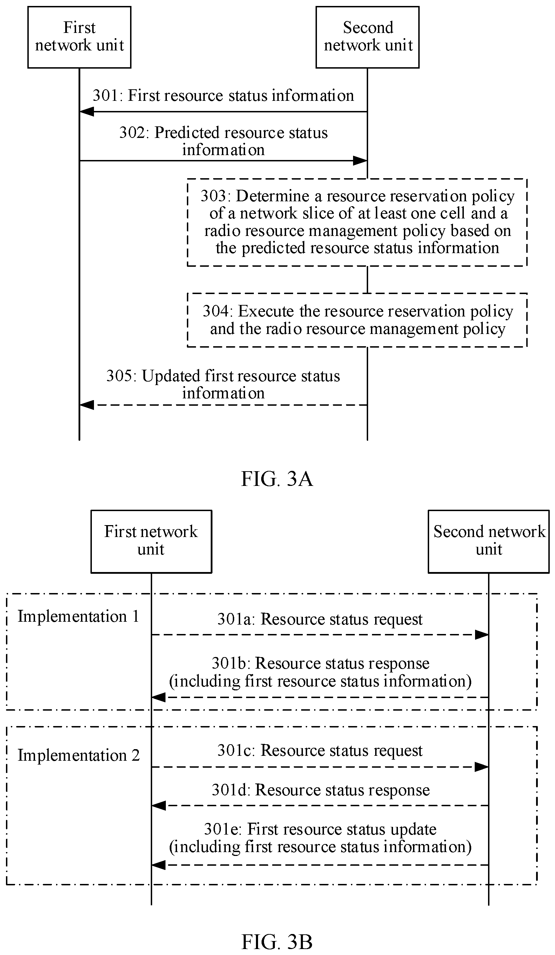

FIG. 3A is a diagram of an embodiment of a communication method according to an embodiment of this application. Refer to FIG. 3A. The method includes the following steps.

301: A second network unit sends first resource status information to a first network unit. Correspondingly, the first network unit receives the first resource status information from the second network unit.

The first resource status information includes current resource status information of a network slice of at least one cell. The first network unit and the second network unit are two network units in an access network device. For example, the first network unit is a CU, and the second network unit is a DU. The at least one cell is a cell covered by the access network device.

Optionally, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume (volume) of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume (volume) of each PDU session included in the network slice, current physical resource block usage of each PDU session, a maximum bit rate currently supported when each terminal device uses the PDU session, a total maximum bit rate currently supported when all terminal devices use the PDU session, or current user performance of each PDU session. The current user performance of each network slice includes at least one of the following: a throughput, a packet delay, or a packet loss rate of each user or all users of each network slice. It can be learned that the first network unit and the second network unit may exchange slice-level resource status information and session-level resource status information. This helps the first network unit to accurately obtain predicted resource status information based on the first resource status information through inference.

Optionally, the first resource status information further includes at least one of the following: signal quality of a reference signal transmitted between at least one terminal device in the at least one cell and the second network unit, information about a channel between the at least one terminal device and the second network unit, a quantity of transmit antennas included in the second network unit, a quantity of receive antennas included in the second network unit, or power headroom of the second network unit. Optionally, the signal quality includes at least one of the following: a reference signal received power (reference signal received power, RSRP), reference signal received quality (reference signal received quality, RSRQ), or a signal to interference plus noise ratio (signal to interference plus noise ratio, SINR). The information about the channel includes at least one of the following: a precoding matrix indication (precoding matrix indication, PMI), a channel quality indicator (channel quality indicator, CQI), or a rank indicator (rank indicator, RI). The power headroom of the second network unit is a power that can be provided by the second network unit for sending a signal under a constraint of a total power. In this implementation, the first network unit may be a CU, and the second network unit may be a DU.

The following describes two possible implementations of a carrier carrying the first resource status information in step 301. This application is also applicable to another implementation. This is not specifically limited in this application.

Implementation 1 is described below with reference to step 301a and step 301b. Optionally, as shown in FIG. 3B, step 301a in FIG. 3B may be performed before step 301.

301a: The first network unit sends a resource status request to the second network unit. Correspondingly, the second network unit receives the resource status request from the first network unit.

The resource status request is used to request the current resource status information of the network slice of the at least one cell.

Optionally, step 301 specifically includes step 301b shown in FIG. 3B.

301b: The second network unit sends a resource status response to the first network unit. The resource status response includes the first resource status information. Correspondingly, the first network unit receives the resource status response from the second network unit.

It can be learned that the second network unit may send the first resource status information to the first network unit by using the resource status response.

Implementation 2 is described below with reference to step 301c to step 301e. Optionally, as shown in FIG. 3B, step 301c and step 301d in FIG. 3B may be performed before step 301.

301c: The first network unit sends a resource status request to the second network unit. Correspondingly, the second network unit receives the resource status request from the first network unit.

301d: The second network unit sends a resource status response to the first network unit. Correspondingly, the first network unit receives the resource status response from the second network unit.

Optionally, step 301 specifically includes step 301e shown in FIG. 3B.

301e: The second network unit sends a first resource status update to the first network unit. The first resource status update includes the first resource status information. Correspondingly, the first network unit receives the first resource status update from the second network unit.

It can be learned that the second network device may send the first resource status information to the first network unit by using the first resource status update.

For example, the following shows a signaling format of the first resource status update. This application is also applicable to another signaling format. This is not specifically limited in this application.
>> per cell-No. of Active UEs, RRC Connections
>> per slice-PRB usage, Capacity Value
>> per slice-UE performance (per-UE/all-UE Throughput/Pkt Delay, Loss)
>> per slice-volume (UL/DL, request including time-interval/stamp)
>> per slice-No. of PDU sessions, No. of Active UEs, No. of RRC Conn.
>> per slice-UE Slice Max Bit Rate (per-UE/all-UE MBR, per-MBR UE num)
>>per session-volume, PRB usage, UE Slice Max Bit Rate, UE perf

It can be learned that per cell-No. of Active UEs indicates a current quantity of active users of each cell, per cell-RRC Connections indicates a current quantity of RRC connections of each cell, per slice-PRB usage indicates current physical resource block usage of each network slice, per slice-Capacity Value indicates a current capacity value of each network slice, per slice-UE performance indicates current user performance of each terminal device of each network slice, or current user performance of all terminal devices of each network slice. per slice-volume indicates a current data volume of each network slice, per slice-No. of PDU sessions indicates a current quantity of PDU sessions of each network slice, per slice-No. of Active UEs indicates a current quantity of active users of each network slice, per slice-No. of RRC Conn indicates a current quantity of RRC connections of each network slice, per slice-UE Slice Max Bit Rate indicates a maximum bit rate currently supported when each terminal device performs transmission by using the network slice, or a total maximum bit rate supported by the network slice when all terminal devices perform transmission by using the network slice, per session-volume indicates a current data volume of each PDU session, per session-UE Slice Max Bit Rate indicates a maximum bit rate currently supported when each terminal device uses the PDU session, or indicates a total maximum bit rate currently supported when all terminal devices use the PDU session, and per session-UE per indicates current user performance of each PDU session.

302: The first network unit sends the predicted resource status information to the second network unit. Correspondingly, the second network unit receives the predicted resource status information from the first network unit.

The predicted resource status information is determined based on the first resource status information and a first model. The predicted resource status information includes predicted future resource status information of the network slice of the at least one cell.

In a possible implementation, the first network unit inputs the first resource status information into the first model, to obtain the predicted resource status information output by the first model. Optionally, the first model is an AI model. For example, the first model is a neural network. It can be learned that the first network unit may obtain the predicted resource status information through inference by using the AI model.

In another possible implementation, another AI node may determine the predicted resource status information based on the first resource status information and the first model. The first network unit obtains the predicted resource status information from the another AI node. Optionally, the another AI node may be a third-party AI node or an AI node in a core network.

Optionally, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

It should be noted that each prediction quantity included in the predicted resource status information may be an instantaneous prediction quantity, an average prediction quantity, or a maximum prediction quantity. This is not specifically limited in this application.

Optionally, the embodiment shown in FIG. 3A further includes step 303 and step 304. Step 303 and step 304 may be performed after step 302.

303: The second network unit determines a resource reservation policy of the network slice of the at least one cell and a radio resource management policy based on the predicted resource status information.

The resource reservation policy includes adjusting resource allocation of the network slice of the at least one cell. The radio resource policy management includes at least one of the following: the second network unit allocates a corresponding radio resource to a new user, or adjusts a radio resource occupied by an existing user. For example, the second network unit allocates the corresponding radio resource to the new user with reference to at least one of system load, interference, or a user priority.

Optionally, the radio resource includes at least one of the following: a codeword, a frequency, a power, a slot, or a space angle.

304: The second network unit executes the resource reservation policy and the radio resource management policy.

The second network unit adjusts resource allocation of the network slice and radio resource management. This helps improve resource utilization, a network QoS indicator, and a user quality of experience (quality of experience, QoE) indicator. Improving resource utilization may also be understood as improving a system capacity. The network QoS indicator and the user QoE indicator are usually reflected by quality of service, an access success rate, a call drop rate, and a handover success rate.

Optionally, the embodiment shown in FIG. 3A further includes step 305. Step 305 may be performed after step 304.

305: The second network unit sends updated first resource status information to the first network unit. Correspondingly, the first network unit receives the updated first resource status information from the second network unit.

The updated first resource status information includes updated current resource status information of the network slice of the at least one cell.

It can be learned that the second network unit adjusts resource allocation of the network slice and radio resource management. The first resource status information is also updated. In this way, network slice resources are properly allocated and radio resource management is performed.

Optionally, the updated first resource status information is carried in a second resource status update.

In this embodiment of this application, the first network unit receives the first resource status information from the second network unit. The first resource status information includes the current resource status information of the network slice of the at least one cell. Then, the first network unit sends the predicted resource status information to the second network unit. The predicted resource status information is determined based on the first resource status information and the first model. The predicted resource status information includes the predicted future resource status information of the network slice of the at least one cell. This helps accurately obtain the future resource status information of the network slice of the at least one cell through inference, so that the second network unit obtains the predicted resource status information. This helps the second network unit properly perform resource allocation on the network slice of the at least one cell and radio resource management.

This application further provides another embodiment. This embodiment is similar to the embodiment shown in FIG. 3A, and a difference lies in that step 301 and step 302 may alternatively be replaced with the following: The second network unit determines the predicted resource status information based on the first resource status information and the first model. In other words, the second network unit infers the predicted resource status information by using the first model. The predicted resource status information does not need to be obtained through inference via the first network unit. Other steps in this embodiment are similar to other steps in the embodiment shown in FIG. 3A, and details are not described herein again.

This application further provides another embodiment. In this embodiment, a first access network device determines first resource status information. The first resource status information includes resource status information of a network slice of at least one cell. The at least one cell is a cell covered by the first access network device or a second access network device. Then, the first access network device determines predicted resource status information based on the first resource status information and a first model. The predicted resource status information includes predicted future resource status information of the network slice of the at least one cell.

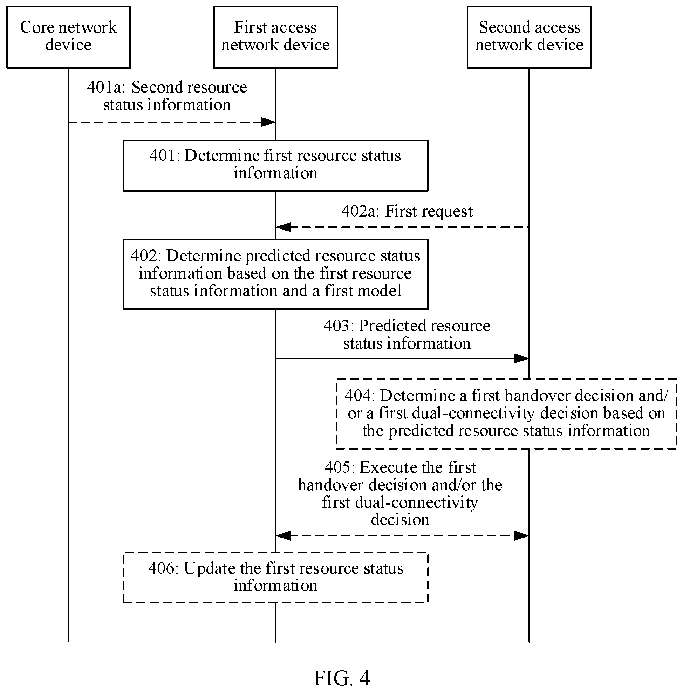

It can be learned that the first resource status information may be current resource status information of a network slice of at least one cell covered by the first access network device. Therefore, the predicted resource status information is predicted future resource status information of the network slice of the at least one cell covered by the first access network device. Alternatively, the first resource status information may be current resource status information of a network slice of at least one cell covered by the second access network device. Therefore, the predicted resource status information is predicted future resource status information of the network slice of the at least one cell covered by the second access network device. The following describes some application scenarios of predicted resource status information with reference to specific embodiments. For details, refer to related descriptions of the embodiments shown in FIG. 4 to FIG. 7 below.

FIG. 4 is a diagram of another embodiment of a communication method according to an embodiment of this application. Refer to FIG. 4. The method includes the following steps.

401: A first access network device determines first resource status information.

The first resource status information includes resource status information of a network slice of at least one cell. The at least one cell is a cell covered by the first access network device.

Optionally, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

Optionally, the first resource status information further includes at least one of the following: signal quality of a reference signal transmitted between at least one terminal device in the at least one cell and the first access network device, information about a channel between the at least one terminal device and the first access network device, a quantity of transmit antennas included in the first access network device, a quantity of receive antennas included in the first access network device, or power headroom of the first access network device. Optionally, the signal quality includes at least one of the following: an RSRP, RSRQ, or an SINR. The information about the channel includes at least one of the following: a PMI, a CQI, or an RI. The power headroom of the first access network device is a power that can be provided by the first access network device for sending a signal under a constraint of a total power.

The first resource status information is similar to the first resource status information in the embodiment shown in FIG. 3A. For details, refer to related descriptions of the first resource status information in the embodiment shown in FIG. 3A.

Optionally, the first access network device includes a CU and a DU. The first access network device may be a CU, and the DU sends the first resource status information to the CU. Correspondingly, step 401 specifically includes: The CU receives the first resource status information from the DU.

402: The first access network device determines predicted resource status information based on the first resource status information and a first model.

Specifically, the first access network device inputs the first resource status information into the first model, to obtain the predicted resource status information output by the first model. That is, the first access network device inputs the first resource status information into the first model as an input parameter of the first model, to obtain the predicted resource status information output by the first model.

Optionally, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

The predicted resource status information is similar to the predicted resource status information in the embodiment shown in FIG. 3A. For details, refer to related descriptions of the predicted resource status information in the embodiment shown in FIG. 3A.

Optionally, the first access network device includes a CU and a DU, the first access network device may be a CU, and step 402 specifically includes: The CU determines the predicted resource status information based on the first resource status information and a first model.

Optionally, the embodiment shown in FIG. 4 further includes step 402a. Step 402a may be performed before step 402.

402a: A second access network device sends a first request to the first access network device. Correspondingly, the first access network device receives the first request from the second access network device.

The first request is used to request predicted future resource status information of the network slice of the at least one cell.

Optionally, the first request further includes a prediction quantity that the second access network device requests to feed back. For example, the prediction quantity includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session. For the prediction quantity, refer to related descriptions of the predicted resource status information in the embodiment shown in FIG. 3A.

It should be noted that there is no fixed execution sequence between step 402a and step 401. Step 402a may be performed before step 401, or step 401 is performed before step 402a, or step 401 and step 402a are simultaneously performed based on a case. This is not specifically limited in this application.

Optionally, the first access network device includes a CU and a DU, and the second access network device includes a CU and a DU. Step 402a specifically includes: The DU of the second access network device sends the first request to the CU of the first access network device. Correspondingly, the CU of the first access network device receives the first request from the DU of the second access network device.

Optionally, the embodiment shown in FIG. 4 further includes step 401a. Step 401a may be performed before step 402.

401a: A core network device sends second resource status information to the first access network device. Correspondingly, the first access network device receives the second resource status information from the core network device.

The second resource status information includes future resource status information that is of the network slice of the at least one cell and that is predicted by the core network device. The second resource status information includes slice-level resource status information predicted by the core network device. Optionally, the second resource status information further includes session-level resource status information that is of each network slice and that is predicted by the core network device. For content included in the second resource status information, refer to related descriptions of content included in the predicted resource status information.

Optionally, the core network device may be a network data analytics function (network data analytics function, NWDAF), an MDAF in a network management device (operations, administration and maintenance, OAM), or another data analytics function in core network servitization.

Optionally, step 402 specifically includes: The first access network device determines the predicted resource status information based on the first resource status information, the second resource status information, and the first model. Specifically, the first access network device inputs the first resource status information and the second resource status information into the first model, to obtain the predicted resource status information output by the first model.

It should be noted that there is no fixed execution sequence between step 401a and step 401. Step 401 may be performed before step 401a, or step 401a is performed before step 401, or step 401 and step 401a are simultaneously performed based on a case. This is not specifically limited in this application.

Optionally, if the embodiment shown in FIG. 4 further includes step 402a, there is no fixed execution sequence between step 401a and both step 401 and step 402a. Step 401a may be performed before step 401 and step 402a, or step 401 and step 402a are performed before step 401a, or step 401a and both step 401 and step 402a are simultaneously performed based on a case. This is not specifically limited in this application.

Optionally, the first access network device includes a CU and a DU, and step 401a specifically includes: The core network device sends the second resource status information to the CU.

403: The first access network device sends the predicted resource status information to the second access network device. Correspondingly, the second access network device receives the predicted resource status information from the first access network device.

Optionally, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

It should be noted that each prediction quantity included in the predicted resource status information may be an instantaneous prediction quantity, an average prediction quantity, or a maximum prediction quantity. This is not specifically limited in this application.

Optionally, the first access network device includes a CU and a DU, and the second access network device includes a CU and a DU. In step 403, the CU of the first access network device sends the predicted resource status information to the DU of the second access network device.

Optionally, the embodiment shown in FIG. 4 further includes step 404 and step 405. Step 404 and step 405 may be performed after step 403.

404: The second access network device determines a first handover decision and/or a first dual-connectivity decision based on the predicted resource status information.

The first handover decision includes that the first terminal device is handed over from the second access network device to the first access network device. The first terminal device is a terminal device served by the second access network device. Specifically, the second access network device may hand over the first terminal device from the second access network device to the first access network device by using an existing handover procedure.

The first dual-connection decision includes that the first access network device serves as a secondary access network device of a second terminal device and establishes a connection to the second terminal device. The second terminal device is a terminal device served by the second access network device. Specifically, the second access network device may use the first access network device as the secondary access network device of the second terminal device by using an existing dual-connectivity procedure.

Optionally, the second access network device includes a CU and a DU, and step 404 specifically includes: The DU of the second access network device determines the first handover decision and/or the first dual-connectivity decision based on the predicted resource status information.

405: The second access network device executes the first handover decision and/or the first dual-connectivity decision with the first access network device.

That the second access network device executes the first handover decision with the first access network device includes: The second access network device and the first access network device may hand over the first terminal device from the second access network device to the first access network device by using the existing handover procedure.

That the second access network device executes the first dual-connectivity decision with the first access network device includes: The second access network device and the first access network device use the first access network device as the secondary access network device of the second terminal device by using the existing dual-connectivity procedure.

Optionally, the first access network device includes a CU and a DU, and the second access network device includes a CU and a DU. The DU of the second access network device executes the first handover decision and/or the first dual-connectivity decision with the DU of the first access network device.

Optionally, the embodiment shown in FIG. 4 further includes step 406. Step 406 may be performed after step 405.

406: The first access network device updates the first resource status information.

Updated first resource status information includes updated current resource status information of the network slice of the at least one cell.

It can be learned that the first access network device executes the first handover decision and/or the first dual-connectivity decision with the second access network device. The first resource status information is also updated. For example, a current resource status of the network slice of the at least one cell changes, and a radio resource status, an available capacity value, and/or a quantity of active users of each cell in the at least one cell change/changes.

Optionally, the first access network device includes a CU and a DU, and step 406 specifically includes: The CU of the first access network device updates the first resource status information.

In this embodiment of this application, the first access network device determines the first resource status information. The first resource status information includes current resource status information of a network slice of at least one cell covered by the first access network device. The first access network device determines the predicted resource status information based on the first resource status information and the first model. The predicted resource status information includes the predicted future resource status information of the network slice of the at least one cell. The first access network device sends the predicted resource status information to the second access network device. It can be learned that the first access network device may accurately obtain the future resource status information of the network slice of the at least one cell through inference. Therefore, the second access network device obtains the predicted resource status information, and performs resource reservation on the network slice, radio resource management (for example, mobility management), and the like based on the predicted resource status information.

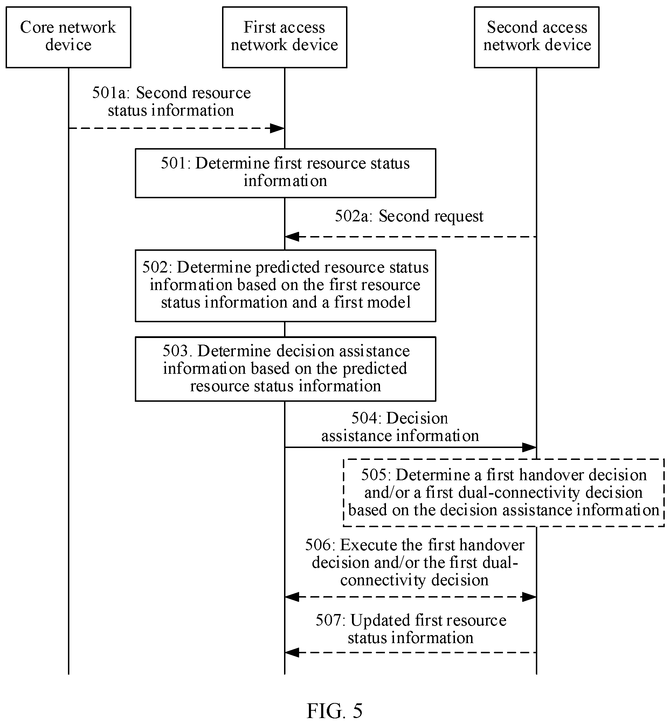

FIG. 5 is a diagram of still another embodiment of a communication method according to an embodiment of this application. Refer to FIG. 5. The method includes the following steps.

501: A first access network device determines first resource status information.

502: The first access network device determines predicted resource status information based on the first resource status information and a first model.

Step 501 and step 502 are similar to step 401 and step 402 in the embodiment shown in FIG. 4. For details, refer to related descriptions of step 401 and step 402 in the embodiment shown in FIG. 4. Details are not described herein again.

503: The first access network device determines decision assistance information based on the predicted resource status information.

The decision assistance information is used to assist a second access network device in determining a first handover decision and/or a first dual-connectivity decision.

Optionally, the decision assistance information includes at least one of the following: an access probability of each network slice of the at least one cell, slice information of a first-type network slice, or slice information of a second-type network slice. The first-type network slice is a network slice whose access probability is greater than or equal to a first threshold. The second-type network slice is a network slice whose access probability is less than or equal to a second threshold.

Optionally, the slice information of the first-type network slice includes an identifier of the first-type network slice. The slice information of the second-type network slice includes an identifier of the second-type network slice.

For example, the first threshold is 80% or 90%. The second threshold is 30% or 40%. For example, the first-type network slice has a large capacity in the future, and the first access network device may determine that an access probability of the first-type network slice is high. The first access network device may indicate the first-type network slice to the second access network device.

Optionally, the first access network device includes a CU and a DU, the first access network device may be a CU, and step 503 specifically includes: The CU determines the decision assistance information based on the predicted resource status information.

Optionally, the embodiment shown in FIG. 5 further includes step 502a. Step 502a may be performed before step 502.

502a: The second access network device sends a second request to the first access network device. Correspondingly, the first access network device receives the second request from the second access network device.

The second request is used to request the decision assistance information that is used to assist the second access network device in determining the first handover decision or the first dual-connectivity decision.

Optionally, the second request further includes a decision assistance quantity that the second access network device requests to feed back. For example, the decision assistance quantity includes at least one of the following: an access probability of each network slice of the at least one cell, slice information of a first-type network slice, or slice information of a second-type network slice.

It should be noted that there is no fixed execution sequence between step 502a and both step 501 and step 502. Step 502a may be performed before step 501 and step 502, or step 501 and step 502 are performed before step 502a, or step 502a and both step 501 and step 502 are simultaneously performed based on a case. This is not specifically limited in this application.

Optionally, the first access network device includes a CU and a DU, and the second access network device includes a CU and a DU. Step 502a specifically includes: The DU of the second access network device sends the second request to the CU of the first access network device. Correspondingly, the CU of the first access network device receives the second request from the DU of the second access network device.

Optionally, the embodiment shown in FIG. 5 further includes step 501a. Step 501a may be performed before step 502.

501a: A core network device sends second resource status information to the first access network device. Correspondingly, the first access network device receives the second resource status information from the core network device.

The second resource status information includes future resource status information that is of the network slice of the at least one cell and that is predicted by the core network device.

Optionally, the core network device may be an NWDAF, an MDAF in OAM, or another network data analytics and processing module in network servitization.

Optionally, step 503 specifically includes: The first access network device determines the decision assistance information based on the first resource status information and the second resource status information. Specifically, the first access network device inputs the first resource status information and the second resource status information into the first model, to obtain the predicted resource status information output by the first model.

It should be noted that there is no fixed execution sequence between step 501a and both step 501 and step 502. Step 501a may be performed before step 501 and step 502, or step 501 and step 502 are performed before step 501a, or step 501a and both step 501 and step 502 are simultaneously performed based on a case. This is not specifically limited in this application. Optionally, if the embodiment shown in FIG. 5 further includes step 502a, there is no fixed execution sequence between step 501a and step 502a. Step 501a may be performed before step 502a, or step 502a is performed before step 501a, or step 501a and step 502a are simultaneously performed based on a case. This is not specifically limited in this application.

Optionally, the first access network device includes a CU and a DU, and step 501a specifically includes: The core network device sends the second resource status information to the CU.

504: The first access network device sends the decision assistance information to the second access network device. Correspondingly, the second access network device receives the decision assistance information from the first access network device.

For the decision assistance information, refer to the foregoing related descriptions. Details are not described herein again.

Optionally, the first access network device includes a CU and a DU, and the second access network device includes a CU and a DU. Step 504 specifically includes: The CU of the first access network device sends the decision assistance information to the DU of the second access network device. Correspondingly, the DU of the second access network device receives the decision assistance information from the DU of the first access network device.

Optionally, the embodiment shown in FIG. 5 further includes step 505 and step 506. Step 505 and step 506 may be performed after step 504.

505: The second access network device determines the first handover decision and/or the first dual-connectivity decision based on the decision assistance information.

506: The second access network device executes the first handover decision and/or the first dual-connectivity decision with the first access network device.

Step 505 and step 506 are similar to step 404 and step 405 in the embodiment shown in FIG. 4. For details, refer to related descriptions of step 404 and step 405 in the embodiment shown in FIG. 4. Details are not described herein again.

Optionally, the embodiment shown in FIG. 5 further includes step 507. Step 507 may be performed after step 506.

507: The second access network device sends updated first resource status information to the first access network device. Correspondingly, the first access network device receives the updated first resource status information from the second access network device.

Step 507 is similar to step 406 in the embodiment shown in FIG. 4. For details, refer to related descriptions of step 406 in the embodiment shown in FIG. 4. Details are not described herein again.

In this embodiment of this application, the first access network device determines the first resource status information. The first resource status information includes current resource status information of a network slice of at least one cell covered by the first access network device. The first access network device determines the predicted resource status information based on the first resource status information and the first model. The predicted resource status information includes the predicted future resource status information of the network slice of the at least one cell. The first access network device determines the decision assistance information based on the predicted resource status information, where the decision assistance information is used to assist the second access network device in determining the first handover decision and/or the first dual-connectivity decision. The first access network device sends the decision assistance information to the second access network device. It can be learned that the first access network device may accurately obtain the predicted resource status information through inference by using the first model. Then, the first access network device determines the decision assistance information based on the predicted resource status information, and sends the decision assistance information to the second access network device. In this way, the second access network device performs resource reservation on the network slice, radio resource management (for example, mobility management), and the like based on the decision assistance information.

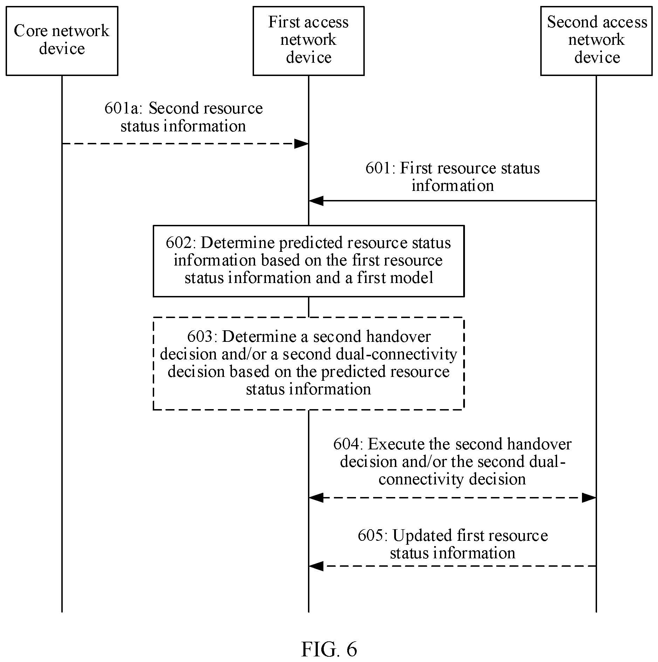

FIG. 6 is a diagram of still another embodiment of a communication method according to an embodiment of this application. Refer to FIG. 6. The method includes the following steps.

601: A second access network device sends first resource status information to a first access network device. Correspondingly, the first access network device receives the first resource status information from the second access network device.

The first resource status information is current resource status information of a network slice of at least one cell covered by the second access network device.

Optionally, the first resource status information includes at least one of the following: signal quality of a reference signal transmitted between at least one terminal device in the at least one cell and the second access network device, information about a channel between the at least one terminal device and the second access network device, a quantity of transmit antennas included in the second access network device, a quantity of receive antennas included in the second access network device, or power headroom of the second access network device. Optionally, the signal quality includes at least one of the following: an RSRP, RSRQ, or an SINR. The information about the channel includes at least one of the following: a PMI, a CQI, or an RI. The power headroom of the second access network device is a power that can be provided by the second access network device for sending a signal under a constraint of a total power.

For the first resource status information, refer to related descriptions of step 401 in the embodiment shown in FIG. 4. Details are not described herein again.

Optionally, the first access network device includes a CU and a DU, and the second access network device includes a CU and a DU. The DU of the second access network device sends the first resource status information to the CU of the first access network device. Correspondingly, the CU of the first access network device receives the first resource status information from the DU of the second access network device.

602: The first access network device determines predicted resource status information based on the first resource status information and a first model.

Step 602 is similar to step 402 in the embodiment shown in FIG. 4. For details, refer to related descriptions of step 402 in the embodiment shown in FIG. 4. Details are not described herein again.

Optionally, the embodiment shown in FIG. 6 further includes step 601a. Step 601a may be performed before step 602.

601a: A core network device sends second resource status information to the first access network device. Correspondingly, the first access network device receives the second resource status information from the core network device.

Optionally, step 602 specifically includes: The first access network device determines the predicted resource status information based on the first resource status information and the second resource status information.

Step 601a is similar to step 401a in the embodiment shown in FIG. 4. For details, refer to related descriptions of step 401a in the embodiment shown in FIG. 4. Details are not described herein again.

It should be noted that there is no fixed execution sequence between step 601 and step 601a. Step 601 may be performed before step 601a, or step 601a is performed before step 601, or step 601 and step 601a are simultaneously performed based on a case. This is not specifically limited in this application.

Optionally, the embodiment shown in FIG. 6 further includes step 603 and step 604. Step 603 and step 604 may be performed after step 602.

603: The first access network device determines a second handover decision and/or a second dual-connectivity decision based on the predicted resource status information.

The second handover decision includes that a third terminal device is handed over from the first access network device to the second access network device. The third terminal device is a terminal device served by the first access network device. Specifically, the first access network device may hand over the third terminal device to the second access network device by using an existing handover procedure.

The second dual-connection decision includes that the second access network device serves as a secondary access network device of a fourth terminal device and establishes a connection to the fourth terminal device. The fourth terminal device is a terminal device served by the first access network device. Specifically, the first access network device may use the second access network device as the secondary access network device of the fourth terminal device by using an existing dual-connectivity procedure.

Optionally, the first access network device includes a CU and a DU, and the CU of the first access network device sends the predicted resource status information to the DU of the first access network device. Step 603 specifically includes: The DU of the first access network device determines a second handover decision and/or a second dual-connectivity decision based on the predicted resource status information.

604: The second access network device executes the second handover decision and/or the second dual-connectivity decision with the first access network device.

That the second access network device executes the second handover decision with the first access network device includes: The second access network device and the first access network device may hand over the third terminal device from the first access network device to the second access network device by using the existing handover procedure.

That the second access network device executes the second dual-connectivity decision with the first access network device includes: The second access network device and the first access network device use the second access network device as the secondary access network device of the fourth terminal device by using the existing dual-connectivity procedure.

Optionally, the first access network device includes a CU and a DU, and the second access network device includes a CU and a DU. The DU of the second access network device executes the second handover decision and/or the second dual-connectivity decision with the DU of the first access network device.

Optionally, the embodiment shown in FIG. 6 further includes step 605. Step 605 may be performed after step 604.

605: The second access network device sends updated first resource status information to the first access network device. Correspondingly, the first access network device receives the updated first resource status information from the second access network device.

The updated first resource status information includes updated current resource status information of the network slice of the at least one cell.

It can be learned that the second access network device executes the second handover decision and/or the second dual-connectivity decision with the first access network device. The first resource status information is also updated. For example, a current resource status of the network slice of the at least one cell changes, and a radio resource status, an available capacity value, and/or a quantity of active users of each cell in the at least one cell change/changes.

In this embodiment of this application, the first access network device receives the first resource status information from the second access network device. The first resource status information includes current resource status information of a network slice of at least one cell covered by the second access network device. The first access network device determines the predicted resource status information based on the first resource status information and the first model. The predicted resource status information includes future resource status information of the network slice of the at least one cell. Then, the first access network device determines the second handover decision and/or the second dual-connectivity decision based on the predicted resource status information, and executes the second handover decision and/or the second dual-connectivity decision with the second access network device. It can be learned that the first access network device may accurately obtain the future resource status information of the network slice of the at least one cell through inference. Therefore, the first access network device performs resource reservation on the network slice, radio resource management, and the like based on the predicted resource status information. In this way, network slice resources are properly allocated and radio resource management is performed.

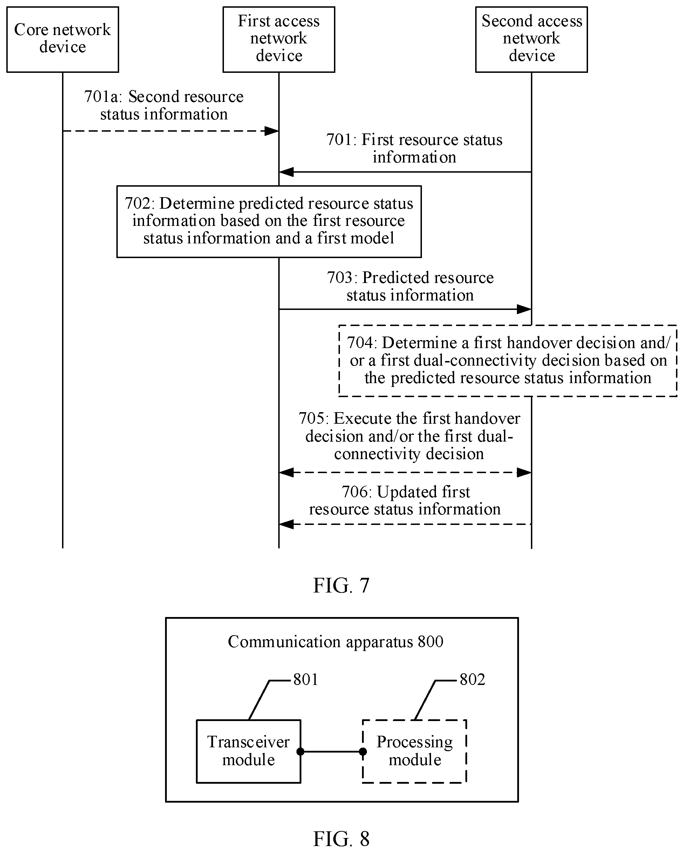

FIG. 7 is a diagram of still another embodiment of a communication method according to an embodiment of this application. Refer to FIG. 7. The method includes the following steps.

701: A second access network device sends first resource status information to a first access network device. Correspondingly, the first access network device receives the first resource status information from the second access network device.

702: The first access network device determines predicted resource status information based on the first resource status information and a first model.

Step 701 and step 702 are similar to step 601 and step 602 in the embodiment shown in FIG. 6. For details, refer to related descriptions of step 601 and step 602 in the embodiment shown in FIG. 6. Details are not described herein again.

Optionally, the embodiment shown in FIG. 7 further includes step 701a. Step 701a may be performed before step 702.

701a: A core network device sends second resource status information to the first access network device. Correspondingly, the first access network device receives the second resource status information from the core network device.

Step 701a is similar to step 601a in the embodiment shown in FIG. 6. For details, refer to related descriptions of step 601a in the embodiment shown in FIG. 6. Details are not described herein again.

Optionally, step 702 specifically includes: The first access network device determines the predicted resource status information based on the first resource status information, the second resource status information, and the first model. Specifically, the first access network device inputs the first resource status information and the second resource status information into the first model, to obtain the predicted resource status information output by the first model.

It should be noted that there is no fixed execution sequence between step 701a and step 701. Step 701 may be performed before step 701a, or step 701a is performed before step 701, or step 701 and step 701a are simultaneously performed based on a case. This is not specifically limited in this application.

703: The first access network device sends the predicted resource status information to the second access network device. Correspondingly, the second access network device receives the predicted resource status information from the first access network device.

Step 703 is similar to step 403 in the embodiment shown in FIG. 4. For details, refer to related descriptions of step 403 in the embodiment shown in FIG. 4. Details are not described herein again.

Optionally, the embodiment shown in FIG. 7 further includes step 704 and step 705. Step 704 and step 705 may be performed after step 703.

704: The second access network device determines a first handover decision and/or a first dual-connectivity decision based on the predicted resource status information.

705: The second access network device executes the first handover decision and/or the first dual-connectivity decision with the first access network device.

Step 704 and step 705 are similar to step 404 and step 405 in the embodiment shown in FIG. 4. For details, refer to related descriptions of step 404 and step 405 in the embodiment shown in FIG. 4. Details are not described herein again.

Optionally, the embodiment shown in FIG. 7 further includes step 706. Step 706 may be performed after step 705.

706: The second access network device sends updated first resource status information to the first access network device. Correspondingly, the first access network device receives the updated first resource status information from the second access network device.

The updated first resource status information includes updated current resource status information of a network slice of at least one cell.

It can be learned that the first access network device executes the first handover decision and/or the first dual-connectivity decision with the first access network device. The first resource status information is also updated. For example, a current resource status of the network slice of the at least one cell changes, and a radio resource status, an available capacity value, and/or a quantity of active users of each cell in the at least one cell change/changes.

In this embodiment of this application, the first access network device receives the first resource status information from the second access network device. The first resource status information includes current resource status information of a network slice of at least one cell covered by the second access network device. The first access network device determines the predicted resource status information based on the first resource status information and the first model. The predicted resource status information includes future resource status information of the network slice of the at least one cell. Then, the first access network device sends the predicted resource status information to the second access network device. Therefore, the second access network device performs resource reservation on the network slice, radio resource management, and the like based on the predicted resource status information. In this way, network slice resources are properly allocated and radio resource management is performed.

The following describes a communication apparatus provided in embodiments of this application.

FIG. 8 is a diagram of a structure of a communication apparatus according to an embodiment of this application. Refer to FIG. 8. The communication apparatus 800 may be configured to perform a process performed by the first network unit or the second network unit in the embodiments shown in FIG. 3A and FIG. 3B. For details, refer to related descriptions in the foregoing method embodiments.

The communication apparatus 800 includes a transceiver module 801. Optionally, the communication apparatus 800 further includes a processing module 802.

The processing module 802 is configured to process data. The transceiver module 801 may implement a corresponding communication function. The transceiver module 801 may also be referred to as a communication interface or a communication module.

Optionally, the communication apparatus 800 may further include a storage module. The storage module may be configured to store instructions and/or data. The processing module 802 may read the instructions and/or the data in the storage module, to enable the communication apparatus to implement the foregoing method embodiments.

In a possible implementation, the communication apparatus 800 may be configured to perform an action performed by the first network unit in the foregoing method embodiments. The communication apparatus 800 may be a first network unit or a component that can be configured in the first network unit. The processing module 802 is configured to perform a processing-related operation on a first network unit side in the foregoing method embodiments. The transceiver module 801 is configured to perform a receiving-related operation on the first network unit side in the foregoing method embodiments.

In another possible implementation, the communication apparatus 800 may be configured to perform an action performed by the second network unit in the foregoing method embodiments. The communication apparatus 800 may be a second network unit or a component that can be configured in the second network unit. The processing module 802 is configured to perform a processing-related operation on a second network unit side in the foregoing method embodiments. The transceiver module 801 is configured to perform a receiving-related operation on the second network unit side in the foregoing method embodiments.

Optionally, the transceiver module 801 may include a sending module and a receiving module. The sending module is configured to perform sending operations in the foregoing method embodiments. The receiving module is configured to perform receiving operations in the foregoing method embodiments.

It should be noted that the communication apparatus 800 may include the sending module but not include the receiving module. Alternatively, the communication apparatus 800 may include the receiving module but not include the sending module. This may be specifically determined depending on whether the foregoing solution performed by the communication apparatus 800 includes a sending action and a receiving action.

Optionally, the communication apparatus 800 is configured to perform an action performed by the first network unit or the second network unit in the embodiments shown in FIG. 3A and FIG. 3B. For details, refer to related descriptions in the embodiments shown in FIG. 3A and FIG. 3B. Details are not described herein again.

For example, the communication apparatus 800 is configured to perform an action performed by the first network unit in the embodiments shown in FIG. 3A and FIG. 3B. The communication apparatus 800 is configured to perform the following solution.

The transceiver module 801 is configured to receive first resource status information from a second network unit, where the first resource status information includes current resource status information of a network slice of at least one cell; and send predicted resource status information to the second network unit, where the predicted resource status information is determined based on the first resource status information and a first model, and the predicted resource status information includes predicted future resource status information of the network slice of the at least one cell.

In a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

In another possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

In another possible implementation, the transceiver module 801 is further configured to receive updated first resource status information from the second network unit, where the updated first resource status information includes updated current resource status information of the network slice of the at least one cell.

In another possible implementation, the transceiver module 801 is further configured to send a resource status request to the second network unit, where the resource status request is used to request the first resource status information; and the transceiver module 801 is specifically configured to receive a resource status response from the second network unit, where the resource status response includes the first resource status information.

In another possible implementation, the transceiver module 801 is specifically configured to receive a resource status update from the second network unit, where the resource status update includes the first resource status information.

For another example, the communication apparatus 800 is configured to perform an action performed by the second network unit in the embodiments shown in FIG. 3A and FIG. 3B. The communication apparatus 800 is configured to perform the following solution.

The transceiver module 801 is configured to send first resource status information to a first network unit, where the first resource status information includes current resource status information of a network slice of at least one cell; and receive predicted resource status information from the first network unit, where the predicted resource status information is determined based on the first resource status information and a first model, and the predicted resource status information includes predicted future resource status information of the network slice of the at least one cell.

In a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

In another possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

In another possible implementation, the processing module 802 is configured to determine a resource reservation policy of the network slice of the at least one cell and a radio resource management policy based on the predicted resource status information; and execute the resource reservation policy and the radio resource management policy.

In another possible implementation, the transceiver module 801 is further configured to send updated first resource status information to the first network unit, where the updated first resource status information includes updated current resource status information of the network slice of the at least one cell.

In another possible implementation, the transceiver module 801 is further configured to receive a resource status request from the first network unit, where the resource status request is used to request the first resource status information; and the transceiver module 801 is specifically configured to send a resource status response to the first network unit, where the resource status response includes the first resource status information.

In another possible implementation, the transceiver module 801 is specifically configured to send a resource status update to the first network unit, where the resource status update includes the first resource status information.

It should be understood that specific processes in which the modules perform the foregoing corresponding processes have been described in detail in the foregoing method embodiments. For brevity, details are not described herein again.

The processing module 802 in the foregoing embodiment may be implemented as at least one processor or processor-related circuit. The transceiver module 801 may be implemented as a transceiver or a transceiver-related circuit. The transceiver module 801 may also be referred to as a communication module or a communication interface. The storage module may be implemented as at least one memory.

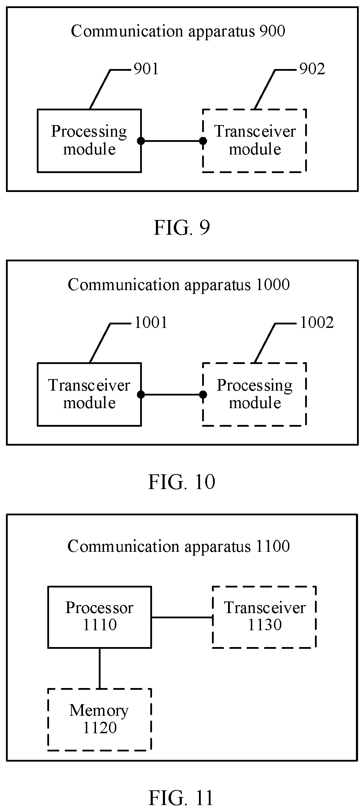

FIG. 9 is another diagram of a structure of a communication apparatus according to an embodiment of this application. Refer to FIG. 9. The communication apparatus 900 may be configured to perform a process performed by the first access network device in the embodiments shown in FIG. 4 to FIG. 7. For details, refer to related descriptions in the foregoing method embodiments.

The communication apparatus 900 includes a processing module 901. Optionally, the communication apparatus 900 further includes a transceiver module 902.

The processing module 901 is configured to process data. The transceiver module 902 may implement a corresponding communication function. The transceiver module 902 may also be referred to as a communication interface or a communication module.

Optionally, the communication apparatus 900 may further include a storage module. The storage module may be configured to store instructions and/or data. The processing module 901 may read the instructions and/or the data in the storage module, to enable the communication apparatus to implement the foregoing method embodiments.

The communication apparatus 900 may be configured to perform an action performed by the first access network device in the foregoing method embodiments. The communication apparatus 900 may be the first access network device or a component that can be configured in the first access network device. The processing module 901 is configured to perform a processing-related operation on a first access network device side in the foregoing method embodiments. The transceiver module 902 is configured to perform a receiving-related operation on the first access network device side in the foregoing method embodiments.

Optionally, the transceiver module 902 may include a sending module and a receiving module. The sending module is configured to perform sending operations in the foregoing method embodiments. The receiving module is configured to perform receiving operations in the foregoing method embodiments.

It should be noted that the communication apparatus 900 may include the sending module but not include the receiving module. Alternatively, the communication apparatus 900 may include the receiving module but not include the sending module. This may be specifically determined depending on whether the foregoing solution performed by the communication apparatus 900 includes a sending action and a receiving action.

Optionally, the communication apparatus 900 is configured to perform the action performed by the first access network device in the embodiments shown in FIG. 4 to FIG. 7. For details, refer to related descriptions in the embodiments shown in FIG. 4 to FIG. 7. Details are not described herein again.

For example, the communication apparatus 900 is configured to perform the action performed by the first access network device in the embodiments shown in FIG. 4 to FIG. 7. The communication apparatus 900 is configured to perform the following solution.

The processing module 901 is configured to determine first resource status information, where the first resource status information includes resource status information of a network slice of at least one cell, and the at least one cell is a cell covered by the communication apparatus 900 or a second access network device; and determine predicted resource status information based on the first resource status information and a first model, where the predicted resource status information includes predicted future resource status information of the network slice of the at least one cell.

In a possible implementation, the predicted resource status information includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

In another possible implementation, the first resource status information includes at least one of the following: a current quantity of active users of each cell in the at least one cell, a current quantity of RRC connections of each cell, a current capacity value of each network slice of the at least one cell, current physical resource block usage of each network slice, current user performance of each network slice, a current data volume of each network slice, a current quantity of PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session included in the network slice, current physical resource block usage of each PDU session, or current user performance of each PDU session.

In another possible implementation, the at least one cell is a cell covered by the communication apparatus 900, and the transceiver module 902 is configured to send the predicted resource status information to the second access network device.

In another possible implementation, the transceiver module 902 is configured to receive a first request from the second access network device, where the first request is used to request the predicted future resource status information of the network slice of the at least one cell.

In another possible implementation, the first request further includes a prediction quantity that the second access network device requests to feed back.

In another possible implementation, the prediction quantity includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

In another possible implementation, the processing module 901 is further configured to execute a first handover decision and/or a first dual-connectivity decision with the second access network device, where the first handover decision and/or the first dual-connectivity decision are/is determined based on the predicted resource status information, the first handover decision includes that a first terminal device is handed over from the second access network device to the communication apparatus 900, the first terminal device is a terminal device served by the second access network device, the first dual-connectivity decision includes that the communication apparatus 900 serves as a secondary access network device of a second terminal device and establishes a connection to the second terminal device, and the second terminal device is a terminal device served by the second access network device.

In another possible implementation, the processing module 901 is further configured to update the first resource status information, where updated first resource status information includes updated current resource status information of the network slice of the at least one cell.

In another possible implementation, the processing module 901 is further configured to determine decision assistance information based on the predicted resource status information, where the decision assistance information is used to assist the second access network device in determining a first handover decision and/or a first dual-connectivity decision; and the transceiver module 902 is further configured to send the decision assistance information to the second access network device.

In another possible implementation, the decision assistance information includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold.

In another possible implementation, the processing module 901 is further configured to execute the first handover decision and/or the first dual-connectivity decision with the second access network device, where the first handover decision or the first dual-connectivity decision is determined by the second access network device based on the decision assistance information, the first handover decision includes that a first terminal device is handed over from the second access network device to the communication apparatus 900, the first dual-connectivity decision includes that the communication apparatus 900 serves as a secondary access network device of a second terminal device and establishes a connection to the second terminal device, and the second terminal device is a terminal device served by the second access network device.

In another possible implementation, the transceiver module 902 is configured to receive updated first resource status information from the second access network device, where the updated first resource status information includes updated current resource status information of the network slice of the at least one cell.

In another possible implementation, the transceiver module 902 is further configured to receive a second request from the second access network device, where the second request is used to request the decision assistance information that is used to assist the second access network device in determining the first handover decision or the first dual-connectivity decision.

In another possible implementation, the second request includes a decision assistance quantity that the second access network device requests to feed back.

In another possible implementation, the decision assistance quantity includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold.

In another possible implementation, the at least one cell is a cell covered by the second access network device, and the processing module 901 is specifically configured to receive the first resource status information from the second access network device.

In another possible implementation, the processing module 901 is further configured to determine a second handover decision or a second dual-connectivity decision based on the predicted resource status information, where the second handover decision includes that a third terminal device is handed over from the communication apparatus 900 to the second access network device, the third terminal device is a terminal device served by the communication apparatus 900, the second dual-connectivity decision includes that the second access network device serves as a secondary access network device of a fourth terminal device and establishes a connection to the fourth terminal device, and the fourth terminal device is a terminal device served by the communication apparatus 900; and execute the second handover decision or the second dual-connectivity decision with the second access network device.

In another possible implementation, the at least one cell is a cell covered by the second access network device, and the transceiver module 902 is configured to send the predicted resource status information to the second access network device.

In another possible implementation, the transceiver module 902 is configured to receive updated first resource status information from the second access network device, where the updated first resource status information includes updated current resource status information of the network slice of the at least one cell.

In another possible implementation, the transceiver module 902 is configured to receive second resource status information from a core network device, where the second resource status information includes future resource status information that is of the network slice of the at least one cell and that is predicted by the core network device; and the processing module 901 is specifically configured to input the first resource status information and the second resource status information into the first model, to obtain the predicted resource status information output by the first model.

It should be understood that specific processes in which the modules perform the foregoing corresponding processes have been described in detail in the foregoing method embodiments. For brevity, details are not described herein again.

The processing module 901 in the foregoing embodiment may be implemented as at least one processor or processor-related circuit. The transceiver module 902 may be implemented as a transceiver or a transceiver-related circuit. The transceiver module 902 may also be referred to as a communication module or a communication interface. The storage module may be implemented as at least one memory.

FIG. 10 is still another diagram of a structure of a communication apparatus according to an embodiment of this application. Refer to FIG. 10. The communication apparatus 1000 may be configured to perform a process performed by the second access network device in the embodiments shown in FIG. 4 to FIG. 7. For details, refer to related descriptions in the foregoing method embodiments.

The communication apparatus 1000 includes a transceiver module 1001. Optionally, the communication apparatus 1000 further includes a processing module 1002.

The processing module 1002 is configured to process data. The transceiver module 1001 may implement a corresponding communication function. The transceiver module 1001 may also be referred to as a communication interface or a communication module.

Optionally, the communication apparatus 1000 may further include a storage module. The storage module may be configured to store instructions and/or data. The processing module 1002 may read the instructions and/or the data in the storage module, to enable the communication apparatus to implement the foregoing method embodiments.

The communication apparatus 1000 may be configured to perform an action performed by the second access network device in the foregoing method embodiments. The communication apparatus 1000 may be the second access network device or a component that can be configured in the second access network device. The processing module 1002 is configured to perform a processing-related operation on a second access network device side in the foregoing method embodiments. The transceiver module 1001 is configured to perform a receiving-related operation on the second access network device side in the foregoing method embodiments.

Optionally, the transceiver module 1001 may include a sending module and a receiving module. The sending module is configured to perform sending operations in the foregoing method embodiments. The receiving module is configured to perform receiving operations in the foregoing method embodiments.

It should be noted that the communication apparatus 1000 may include the sending module but not include the receiving module. Alternatively, the communication apparatus 1000 may include the receiving module but not include the sending module. This may be specifically determined depending on whether the foregoing solution performed by the communication apparatus 1000 includes a sending action and a receiving action.

Optionally, the communication apparatus 1000 is configured to perform the action performed by the second access network device in the embodiments shown in FIG. 4 to FIG. 7. For details, refer to related descriptions in the embodiments shown in FIG. 4 to FIG. 7. Details are not described herein again.

For example, the communication apparatus 1000 is configured to perform the action performed by the second access network device in the embodiments shown in FIG. 4 to FIG. 7. The communication apparatus 1000 is configured to perform the following solution.

The transceiver module 1001 is configured to receive predicted resource status information from a first access network device, where the predicted resource status information includes predicted future resource status information of a network slice of at least one cell, the at least one cell is a cell covered by the first access network device or the communication apparatus 1000, the predicted resource status information is determined based on first resource status information and a first model, and the first resource status information includes resource status information of the network slice of the at least one cell.

In a possible implementation, the transceiver module 1001 is further configured to send a first request to the first access network device, where the first request is used to request the predicted future resource status information of the network slice of the at least one cell.

In another possible implementation, the first request further includes a prediction quantity that the communication apparatus 1000 requests to feed back.

In another possible implementation, the prediction quantity includes at least one of the following: a predicted data volume of each network slice of the at least one cell, predicted physical resource block usage of each network slice, a predicted capacity value of each network slice, a predicted quantity of active users of each network slice, a predicted quantity of RRC connections of each network slice, a predicted quantity of PDU sessions of each network slice, a predicted maximum bit rate supported when each terminal device performs transmission by using the network slice, a predicted total maximum bit rate supported when all terminal devices perform transmission by using the network slice, a predicted data volume of each PDU session included in the network slice, or predicted physical resource block usage of each PDU session.

In another possible implementation, the processing module 1002 is configured to determine a first handover decision or a first dual-connectivity decision based on the predicted resource status information; and execute the first handover decision or the first dual-connectivity decision with the first access network device.

In another possible implementation, the transceiver module 1001 is further configured to send updated first resource status information to the first access network device, where the updated first resource status information includes updated current resource status information of the network slice of the at least one cell.

In another possible implementation, the transceiver module 1001 is further configured to send the first resource status information to the first access network device.

For another example, the communication apparatus 1000 is further configured to perform the following solution.

The transceiver module 1001 is configured to receive decision assistance information from a first access network device, where the decision assistance information is determined based on predicted resource status information, the predicted resource status information includes predicted future resource status information of a network slice of at least one cell, the at least one cell is a cell covered by the first access network device or the communication apparatus 1000, the predicted resource status information is determined based on first resource status information and a first model, and the first resource status information includes current resource status information of the network slice of the at least one cell.

In a possible implementation, the processing module 1002 is configured to determine a first handover decision or a first dual-connectivity decision based on the decision assistance information, where the first handover decision includes that a first terminal device is handed over from the communication apparatus 1000 to the first access network device, the first terminal device is a terminal device served by the communication apparatus 1000, the first dual-connectivity decision includes that the first access network device serves as a secondary access network device of a second terminal device and establishes a connection to the second terminal device, and the second terminal device is a terminal device served by the communication apparatus 1000; and execute the first handover decision or the first dual-connectivity decision with the first access network device.

In another possible implementation, the transceiver module 1001 is further configured to send updated first resource status information to the first access network device, where the updated first resource status information includes updated current resource status information of the network slice of the at least one cell.

In another possible implementation, the transceiver module 1001 is further configured to send a second request to the first access network device, where the second request is used to request the decision assistance information that is used to assist the communication apparatus 1000 in determining the first handover decision or the first dual-connectivity decision.

In another possible implementation, the second request further includes a decision assistance quantity that the communication apparatus 1000 requests to feed back.

In another possible implementation, the decision assistance quantity includes at least one of the following: an access probability of each network slice of the at least one cell, slice information of a first-type network slice, or slice information of a second-type network slice, where the first-type network slice is a network slice whose access probability is greater than or equal to a first threshold, and the second-type network slice is a network slice whose access probability is less than or equal to a second threshold.

It should be understood that specific processes in which the modules perform the foregoing corresponding processes have been described in detail in the foregoing method embodiments. For brevity, details are not described herein again.

The processing module 1002 in the foregoing embodiment may be implemented as at least one processor or processor-related circuit. The transceiver module 1001 may be implemented as a transceiver or a transceiver-related circuit. The transceiver module 1001 may also be referred to as a communication module or a communication interface. The storage module may be implemented as at least one memory.

An embodiment of this application further provides a communication apparatus 1100. Refer to FIG. 11. The communication apparatus 1100 includes a processor 1110. The processor 1110 is coupled to a memory 1120. The memory 1120 is configured to store a computer program or instructions and/or data. The processor 1110 is configured to execute the computer program or the instructions and/or the data stored in the memory 1120, to enable the methods in the foregoing method embodiments to be performed. The communication apparatus 1100 is configured to implement an operation performed by the first network unit, the second network unit, the first access network device, or the second access network device in the foregoing method embodiments.

Optionally, the communication apparatus 1100 includes one or more processors 1110.

Optionally, as shown in FIG. 11, the communication apparatus 1100 may further include the memory 1120.

Optionally, the communication apparatus 1100 may include one or more memories 1120.

Optionally, the memory 1120 and the processor 1110 may be integrated, or are separately disposed.

Optionally, as shown in FIG. 11, the communication apparatus 1100 may further include a transceiver 1130. The transceiver 1130 is configured to receive and/or send a signal. For example, the processor 1110 is configured to control the transceiver 1130 to receive and/or send the signal.

This application further provides a communication apparatus 1200. The communication apparatus 1200 may be a network device or a chip. The communication apparatus 1200 may be configured to perform an operation performed by the first network unit, the second network unit, the first access network device, or the second access network device in the embodiments shown in FIG. 3A, FIG. 3B, and FIG. 4 to FIG. 7.

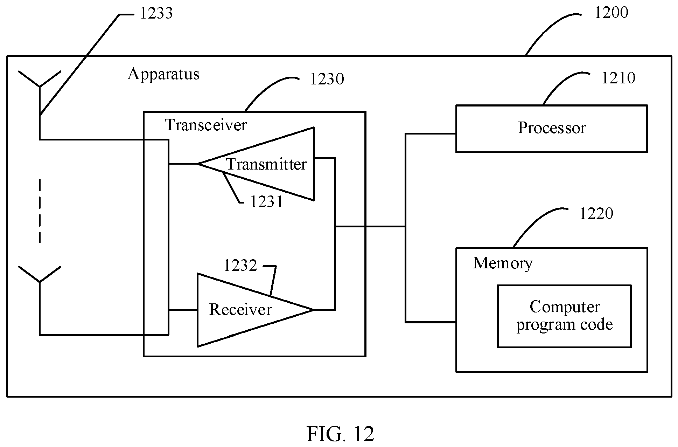

When the communication apparatus 1200 is a network device, for example, a base station, FIG. 12 is a diagram of a simplified structure of the base station. The base station includes a part 1210, a part 1220, and a part 1230.

The part 1210 is mainly configured to perform baseband processing, control the base station, and the like. The part 1210 is usually a control center of the base station, may be usually referred to as a processor, and is configured to control the base station to perform a processing operation on the first network unit, the second network unit, the first access network device, or the second access network device side in the foregoing method embodiments.

The part 1220 is mainly configured to store computer program code and data.

The part 1230 is mainly configured to: receive or send a radio frequency signal, and perform conversion between the radio frequency signal and a baseband signal. The part 1230 may be usually referred to as a transceiver module, a transceiver machine, a transceiver circuit, a transceiver, or the like. The transceiver module in the part 1230 may also be referred to as a transceiver machine, a transceiver, or the like, and includes an antenna 1233 and a radio frequency circuit (not shown in the figure). The radio frequency circuit is mainly configured to perform radio frequency processing. Optionally, in the part 1230, a component configured to implement a receiving function may be considered as a receiver, and a component configured to implement a sending function may be considered as a transmitter. In other words, the part 1230 includes a receiver 1232 and a transmitter 1231. The receiver may also be referred to as a receiving module, a receiver machine, a receiver circuit, or the like, and the transmitter may be referred to as a transmitting module, a transmitter machine, a transmitter circuit, or the like.

The part 1210 and the part 1220 may include one or more boards, and each board may include one or more processors and one or more memories. The processor is configured to read and execute a program in the memory to implement a baseband processing function and control the base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver module in the part 1230 is configured to perform sending and receiving-related processes performed by the first network unit or the second network unit in the embodiments shown in FIG. 3A and FIG. 3B. The processor in the part 1210 is configured to perform a processing-related process performed by the first network unit or the second network unit in the embodiments shown in FIG. 3A and FIG. 3B.

For another example, in an implementation, the transceiver module in the part 1230 is configured to perform sending and receiving-related processes performed by the first access network device or the second access network device in the embodiments shown in FIG. 4 to FIG. 7. The processor in the part 1210 is configured to perform a processing-related process performed by the first access network device or the second access network device in the embodiments shown in FIG. 4 to FIG. 7.

It should be understood that FIG. 12 is merely an example rather than a limitation. The network device including the processor, the memory, and the transceiver may not depend on the structures shown in FIG. 8 to FIG. 10.

When the communication apparatus 1200 is a chip, the chip includes a transceiver, a memory, and a processor. The transceiver may be an input/output circuit or a communication interface. The processor is a processor, a microprocessor, or an integrated circuit integrated on the chip. A sending operation of the first network unit, the second network unit, the first access network device, or the second access network device in the foregoing method embodiments may be understood as an output of the chip, and a receiving operation of the first network unit, the second network unit, the first access network device, or the second access network device in the foregoing method embodiments may be understood as an input of the chip.

An embodiment of this application further provides a computer-readable storage medium. The computer-readable storage medium stores computer instructions used to implement the method performed by the first network unit, the second network unit, the first access network device, or the second access network device in the foregoing method embodiments.

For example, when a computer program is executed by a computer, the computer is enabled to implement the method performed by the first network unit, the second network unit, the first access network device, or the second access network device in the foregoing method embodiments.

An embodiment of this application further provides a computer program product including instructions. When the instructions are executed by a computer, the computer is enabled to implement the method performed by the first network unit, the second network unit, the first access network device, or the second access network device in the foregoing method embodiments.

An embodiment of this application further provides a communication system. The communication system includes a first network unit and a second network unit. The first network unit is configured to perform some or all operations performed by the first network unit in the embodiments shown in FIG. 3A and FIG. 3B, and the second network unit is configured to perform some or all operations of the second network unit in the embodiments shown in FIG. 3A and FIG. 3B.

An embodiment of this application further provides another communication system. The communication system includes a first access network device and a second access network device. The first access network device is configured to perform some or all operations performed by the first access network device in the embodiments shown in FIG. 4 to FIG. 7, and the second access network device is configured to perform some or all operations of the second access network device in the embodiments shown in FIG. 4 to FIG. 7.

An embodiment of this application further provides a chip apparatus, including a processor, configured to invoke a computer program or computer instructions stored in a memory, to enable the processor to perform the methods provided in the embodiments shown in FIG. 3A, FIG. 3B, and FIG. 4 to FIG. 7.

In a possible implementation, an input of the chip apparatus corresponds to a receiving operation in any one of the embodiments shown in FIG. 3A, FIG. 3B, and FIG. 4 to FIG. 7, and an output of the chip apparatus corresponds to a sending operation in any one of the embodiments shown in FIG. 3A, FIG. 3B, and FIG. 4 to FIG. 7.

Optionally, the processor is coupled to the memory through an interface.

Optionally, the chip apparatus further includes the memory, and the memory stores the computer program or the computer instructions.

The processor mentioned above may be a general-purpose central processing unit, a microprocessor, an application-specific integrated circuit (application-specific integrated circuit, ASIC), or one or more integrated circuits configured to control program execution of the method provided in any one of the embodiments shown in FIG. 3A, FIG. 3B, and FIG. 4 to FIG. 7. The memory mentioned in any one of the foregoing may be a read-only memory (read-only memory, ROM), another type of static storage device that can store static information and instructions, a random access memory (random access memory, RAM), or the like.

It may be clearly understood by a person skilled in the art that for convenience and brevity of description, for explanation and beneficial effect of related content in any one of the apparatuses provided above, refer to the foregoing corresponding method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the part essentially contributing to the technical solutions of this application or all or some of the technical solutions may be implemented in a form of a software product. The computer software product is stored in a storage medium and includes a plurality of instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
determining, by a first access network device, first resource status information, wherein the first resource status information comprises resource status information of a network slice of at least one cell, and the at least one cell is a cell covered by the first access network device or a second access network device; and
determining, by the first access network device, predicted resource status information based on the first resource status information and a first model, wherein the predicted resource status information comprises predicted future resource status information of the network slice of the at least one cell.

2. The method according to claim 1, wherein the predicted resource status information comprises at least one of the following: a predicted data volume of each network slice of the at least one cell, predicted physical resource block usage of each network slice, a predicted capacity value of each network slice, a predicted quantity of active users of each network slice, a predicted quantity of radio resource control RRC connections of each network slice, a predicted quantity of protocol data unit PDU sessions of each network slice, a predicted maximum bit rate supported when each terminal device performs transmission by using the network slice, a predicted total maximum bit rate supported when all terminal devices perform transmission by using the network slice, a predicted data volume of each PDU session comprised in the network slice, or predicted physical resource block usage of each PDU session.

3. The method according to claim 1 or 2, wherein the first resource status information comprises at least one of the following: a current quantity of active users of each cell in the at least one cell, a current quantity of radio resource control RRC connections of each cell, a current capacity value of each network slice of the at least one cell, current physical resource block usage of each network slice, current user performance of each network slice, a current data volume of each network slice, a current quantity of protocol data unit PDU sessions of each network slice, a current quantity of active users of each network slice, a current quantity of RRC connections of each network slice, a maximum bit rate currently supported when each terminal device performs transmission by using the network slice, a total maximum bit rate currently supported when all terminal devices perform transmission by using the network slice, a current data volume of each PDU session comprised in the network slice, current physical resource block usage of each PDU session, or current user performance of each PDU session.

4. The method according to any one of claims 1 to 3, wherein the at least one cell is a cell covered by the first access network device, and the method further comprises:
sending, by the first access network device, the predicted resource status information to the second access network device.

5. The method according to claim 4, wherein before sending, by the first access network device, the predicted resource status information to the second access network device, the method further comprises:
receiving, by the first access network device, a first request from the second access network device, wherein the first request is used to request the predicted future resource status information of the network slice of the at least one cell.

6. The method according to claim 5, wherein the first request further comprises a prediction quantity that the second access network device requests to feed back.

7. The method according to any one of claims 4 to 6, wherein the method further comprises:
executing, by the first access network device, a first handover decision and/or a first dual-connectivity decision with the second access network device, wherein the first handover decision and/or the first dual-connectivity decision are/is determined based on the predicted resource status information, the first handover decision comprises that a first terminal device is handed over from the second access network device to the first access network device, the first dual-connectivity decision comprises that the first access network device serves as a secondary access network device of a second terminal device and establishes a connection to the second terminal device, and the second terminal device is a terminal device served by the second access network device.

8. The method according to claim 7, wherein after executing, by the first access network device, the first handover decision or the first dual-connectivity decision with the second access network device, the method further comprises:
updating, by the first access network device, the first resource status information, wherein updated first resource status information comprises updated current resource status information of the network slice of the at least one cell.

9. The method according to any one of claims 1 to 3, wherein the method further comprises:
determining, by the first access network device, decision assistance information based on the predicted resource status information, wherein the decision assistance information is used to assist the second access network device in determining a first handover decision and/or a first dual-connectivity decision; and
sending, by the first access network device, the decision assistance information to the second access network device.

10. The method according to claim 9, wherein the decision assistance information comprises at least one of the following: an access probability of each network slice of the at least one cell, slice information of a first-type network slice, or slice information of a second-type network slice, wherein the first-type network slice is a network slice whose access probability is greater than or equal to a first threshold, and the second-type network slice is a network slice whose access probability is less than or equal to a second threshold.

11. The method according to claim 9 or 10, wherein the method further comprises:
executing, by the first access network device, the first handover decision and/or the first dual-connectivity decision with the second access network device, wherein the first handover decision or the first dual-connectivity decision is determined by the second access network device based on the decision assistance information, the first handover decision comprises that a first terminal device is handed over from the second access network device to the first access network device, the first terminal device is a terminal device served by the second access network device, the first dual-connectivity decision comprises that the first access network device serves as a secondary access network device of a second terminal device and establishes a connection to the second terminal device, and the second terminal device is a terminal device served by the second access network device.

12. The method according to claim 11, wherein after executing, by the first access network device, the first handover decision or the first dual-connectivity decision with the second access network device, the method further comprises:
receiving, by the first access network device, updated first resource status information from the second access network device, wherein the updated first resource status information comprises updated current resource status information of the network slice of the at least one cell.

13. The method according to any one of claims 9 to 12, wherein before sending, by the first access network device, the decision assistance information to the second access network device, the method further comprises:
receiving, by the first access network device, a second request from the second access network device, wherein the second request is used to request the decision assistance information that is used to assist the second access network device in determining the first handover decision or the first dual-connectivity decision.

14. The method according to claim 13, wherein the second request comprises a decision assistance quantity that the second access network device requests to feed back.

15. The method according to any one of claims 1 to 3, wherein the at least one cell is a cell covered by the second access network device, and determining, by the first access network device, the first resource status information comprises:
receiving, by the first access network device, the first resource status information from the second access network device.

16. The method according to claim 15, wherein the method further comprises:
determining, by the first access network device, a second handover decision or a second dual-connectivity decision based on the predicted resource status information, wherein the second handover decision comprises that a third terminal device is handed over from the first access network device to the second access network device, the second dual-connectivity decision comprises that the second access network device serves as a secondary access network device of a fourth terminal device and establishes a connection to the fourth terminal device, and the fourth terminal device is a terminal device served by the first access network device; and
executing, by the first access network device, the second handover decision or the second dual-connectivity decision with the second access network device.

17. The method according to any one of claims 1 to 3, wherein the at least one cell is a cell covered by the second access network device, and the method further comprises:
sending, by the first access network device, the predicted resource status information to the second access network device.

18. The method according to claim 16 or 17, wherein the method further comprises:
receiving, by the first access network device, updated first resource status information from the second access network device, wherein the updated first resource status information comprises updated current resource status information of the network slice of the at least one cell.

19. The method according to any one of claims 1 to 18, wherein the method further comprises:
receiving, by the first access network device, second resource status information from a core network device, wherein the second resource status information comprises future resource status information that is of the network slice of the at least one cell and that is predicted by the core network device; and
determining, by the first access network device, the predicted resource status information based on the first resource status information, the second resource status information, and the first model comprises:
inputting, by the first access network device, the first resource status information and the second resource status information into the first model, to obtain the predicted resource status information output by the first model.

20. A communication method, wherein the method comprises:
receiving, by a second access network device, predicted resource status information from a first access network device, wherein the predicted resource status information comprises predicted future resource status information of a network slice of at least one cell, the at least one cell is a cell covered by the first access network device or the second access network device, the predicted resource status information is determined based on first resource status information and a first model, and the first resource status information comprises resource status information of the network slice of the at least one cell.

21. The method according to claim 20, wherein before receiving, by the second access network device, the predicted resource status information from the first access network device, the method further comprises:
sending, by the second access network device, a first request to the first access network device, wherein the first request is used to request the predicted future resource status information of the network slice of the at least one cell.

22. The method according to claim 20 or 21, wherein the method further comprises:
determining, by the second access network device, a first handover decision or a first dual-connectivity decision based on the predicted resource status information; and
executing, by the second access network device, the first handover decision or the first dual-connectivity decision with the first access network device.

23. A communication method, wherein the method comprises:
receiving, by a second access network device, decision assistance information from a first access network device, wherein the decision assistance information is determined based on predicted resource status information, the predicted resource status information comprises predicted future resource status information of a network slice of at least one cell, the at least one cell is a cell covered by the first access network device or the second access network device, the predicted resource status information is determined based on first resource status information and a first model, and the first resource status information comprises current resource status information of the network slice of the at least one cell.

24. The method according to claim 23, wherein the method further comprises:
determining, by the second access network device, a first handover decision or a first dual-connectivity decision based on the decision assistance information, wherein the first handover decision comprises that a first terminal device is handed over from the second access network device to the first access network device, the first terminal device is a terminal device served by the second access network device, the first dual-connectivity decision comprises that the first access network device serves as a secondary access network device of a second terminal device and establishes a connection to the second terminal device, and the second terminal device is a terminal device served by the second access network device; and
executing, by the second access network device, the first handover decision or the first dual-connectivity decision with the first access network device.

25. The method according to claim 23 or 24, wherein before receiving, by the second access network device, the decision assistance information from the first access network device, the method further comprises:
sending, by the second access network device, a second request to the first access network device, wherein the second request is used to request the decision assistance information that is used to assist the second access network device in determining the first handover decision or the first dual-connectivity decision.

26. A communication apparatus, wherein the communication apparatus comprises a processing module, and the processing module is configured to perform a processing operation in the method according to any one of claims 1 to 19.

27. A communication apparatus, wherein the communication apparatus comprises a transceiver module, and the transceiver module is configured to perform sending and receiving operations in the method according to any one of claims 20 to 22, or the transceiver module is configured to perform sending and receiving operations in the method according to any one of claims 23 to 25.

28. A communication apparatus, wherein the communication apparatus comprises a processor, and the processor is configured to execute a computer program or computer instructions in a memory, to implement the method according to any one of claims 1 to 25.

29. The communication apparatus according to claim 28, wherein the communication apparatus further comprises the memory, configured to store the computer program or the computer instructions.

30. A computer-readable storage medium, wherein the computer-readable storage medium stores a computer program, and when the computer program is executed by a communication apparatus, the communication apparatus is enabled to perform the method according to any one of claims 1 to 25.
